# EUROPEAN PATENT APPLICATION

(11) **EP 3 385 601 A1**
(43) Date of publication of application: **10.10.2018**
(21) Application number: 16870777.6
(22) Date of filing: 01.12.2016
(51) Int. Cl.: F21S 2/00, F21V 5/00, F21V 19/00, F21V 23/00, F21V 23/06, G02F 1/13357, F21Y 115/10

(54) **ILLUMINATION DEVICE, DISPLAY DEVICE, AND TELEVISION RECEIVER**

(30) Priority: 02.12.2015 JP 2015235766
(71) Applicant: Sharp Kabushiki Kaisha, Sakai City, Osaka 590-8522 (JP)
(72) Inventor: SHIMIZU,Takaharu, Sakai City, Osaka 590-8522 (JP)
(74) Representative: Müller Hoffmann & Partner
(86) International application number: PCT/JP2016/085735
(87) International publication number: WO 2017/094840

(57) **Abstract**

A backlight unit 12 includes LEDs 17, a chassis 14, LED boards 18, and a reflection sheet 20. The chassis 14 includes a bottom plate 14a on an opposite side from the light emitting surface 17a side of the LEDs 17. The LEDs 17 are mounted on the LED boards 18. The LED boards 18 are disposed along the bottom plate 14a. The reflection sheet 20 is configured to reflect light rays from the LEDs 17. The reflection sheet 20 at least includes a bottom-side reflecting portion 20a that overlaps the LED boards 18 from the light exiting surfaces 17a side and projected reflecting portions 20b that project from the bottom-side reflecting portion 20a toward the light exiting side. The projected reflecting portions 20b include base-side projected sections 23 that are angled relative to the bottom-side reflecting portion 20a with an angle that is larger than an angle of distal end-side projected sections 23 of the projected reflecting portions 20b relative to the bottom-side reflecting portion 20a.

## Description

### TECHNICAL FIELD

The present invention relates to a lighting device, a display device, and a television device.

### BACKGROUND ART

A backlight unit disclosed in Patent Document 1 has been known as an example of backlight units used in conventional liquid crystal displays. The backlight unit disclosed in Patent Document 1 includes multiple light source boards, a driver circuit board, a bottom chassis, and an optical sheet block. Light emitting components configured to emit illumination light are mounted on the light source boards. The driver circuit board includes a driver circuit for the light emitting components. The bottom chassis includes surfaces, to one of which the light source boards are attached. The optical sheet block is attached to the surface of the bottom chassis with a gap that is provided between the optical sheet block and the surface of the bottom chassis . The optical sheet block is configured to perform optical processing on the illumination light emitted by the light source boards. The driver circuit board is attached to the surface of the bottom chassis on another side of a reflection plate included in the optical sheet block. According to the configuration, an overall thickness of the backlight unit can be reduced and the number of parts can be reduced.

### RELATED ART DOCUMENT

### Patent Document

Patent Document 1: Unexamined Japanese Patent Application Publication No. 2009-129707

### Problem to be Solved by the Invention

The backlight unit disclosed in Patent Document 1 includes connectors disposed on the light source boards for establishing electrical connection between the light source boards and the driver circuit board. The connectors and the driver circuit board are covered with a peripheral portion of the reflection plate. The peripheral portion of the reflection plate is angled relative to a main surface with an angle that is constant for an entire length. Therefore, a position of a base of the peripheral portion of the reflection plate depends on the angle of the peripheral portion relative to the main surface. There is limitation to bring the light emitting components disposed at ends of the light source boards closer to ends of the backlight unit and thus an amount of light supplied from the light emitting components to the ends of the backlight unit tends to be insufficient. Furthermore, the peripheral portion that is angled relative to the main surface with the angle that is constant for the enter length may include an area on the base side in which an amount of reflected light is significantly small. Such an area may be recognized as a dark spot.

The backlight unit disclosed in Patent Document 1 has the problem described above (a first problem) and a second problem that is different from the first problem. If the backlight unit is configured such that the light source boards are disposed in the backlight unit and the adjacent light source boards are connected by the connectors, the connectors overlap the main surface of the reflection plate. According to such a configuration, if the main surface includes holes for passing the connectors, light reflection efficiency may locally decrease due to the holes resulting in a dark spot.

### DISCLOSURE OF THE PRESENT INVENTION

The present invention was made in view of the above circumstances. An object is to reduce uneven brightness.

### Means for Solving the Problem

To solve the first problem described earlier, a lighting device includes a light source, a chassis, a light source board, and a reflection member. The chassis includes a bottom portion on an opposite side from a light emitting surface side of the light source. The chassis holds the light source therein. The light source board on which the light source is mounted is disposed along the bottom portion. The reflection member is configured to reflect light rays from the light sources. The reflection member at least includes a bottom-side reflecting portion and at least one projected reflecting portion. The bottom-side reflecting portion overlaps the light source board from the light emitting surface side. The at least one projected reflecting portion projects from the bottom-side reflecting portion toward a light exiting side. The at least one projected reflecting portion includes a base-side projected section angled relative to the bottom-side reflecting portion with an angle that is larger than an angle of a distal end-side projected section of the at least one projected reflecting portion relative to the bottom-side reflecting portion.

The light rays emitted by the light source mounted on the light source board may be reflected by the bottom-side reflecting portion and the at least one projected reflecting portion to the outside. The angle of the base-side projected section of the at least one projected reflecting portion relative to the bottom-side reflecting portion is larger than the angle of the distal end-side projected section of the at least one projected reflecting portion relative to the bottom-side reflecting portion. In comparison to a configuration in which the angle of the projected reflecting portion relative to the bottom-side reflecting portion is equal to the angle of the distal end-side reflecting section for an entire area, a position of a base of the at least one projected reflecting portion can be set closer to an end of the lighting device. Namely, positions of the light source can be set closer to the end of the lighting device. According to the configuration, a larger amount of light can be supplied from the light source to an edge section of the lighting device. Therefore, a difference between the amount of light exiting from the edge section of the lighting device and the amount of light exiting from the middle section of the lighting device can be reduced and thus the uneven brightness can be properly reduced. Furthermore, if the angle of the projected reflecting portion relative to the bottom-side reflecting portion is constant for the entire area, the projected reflecting portion may have an area in which an amount of reflected light is significantly small on the base side. Such an area may become a dark spot. As described above, the angle of the base-side projected section of the projected reflecting portion relative to the bottom-side reflecting portion is set larger than the angle of the distal end-side projected section. Therefore, the dark spot is less likely to be produced and thus the uneven brightness can be properly reduced. Because the uneven brightness can be reduced, this configuration is preferable for reducing the thickness of the lighting device.

Preferable embodiments of the first invention may include the following configurations.
(1) The lighting device may further include power feeding portion disposed on the light source board for feeding power to the light source. The at least one projected reflecting portion may be disposed to cover the power feeding portions. According to the configuration, in comparison to a configuration in which the reflection member includes a section overlapping the power feeding portions with holes, the light reflectivity can be maintained uniform and thus the dark spot in which the amount of emitting light is locally reduced is less likely to be produced and the light rays are efficiently reflected by the projected reflecting portion. This configuration is preferable for reducing the uneven brightness. Furthermore, this configuration is preferable for reducing power consumption because this configuration provides high light use efficiency.
(2) The angle of the bas-side projected section relative to the bottom-side reflecting portion may be set in a range from 70° to 95°. By setting the angle of the base-side projected section of the projected reflecting portion relative to the bottom-side reflecting portion at 70° or larger, in comparison to a configuration in which the angle is set smaller than 70°, the light source can be disposed at a position sufficiently closer to the end of the lighting device. Furthermore, the base-side projected section of the projected reflecting portion has a height that is sufficient to cover the power feeding portion. By setting the angle of the base-side projected section of the projected reflecting portion relative to the bottom-side reflecting portion at 95° or smaller, in comparison to a configuration in which the angle is set larger than 95°, the projected reflecting portion can deliver higher light reflecting performance.
(3) The angle of the base-side projected section relative to the bottom-side reflecting portion may be set in a range from 85° to 95°. According to the configuration, in comparison to a configuration in which the angle is smaller than 85°, the light source can be disposed further closer to the end of the lighting device. This configuration is preferable for reducing the uneven brightness. Furthermore, the base-side projected section of the projected reflecting portion has a height that is sufficient to cover the power feeding portion. By setting the angle of the base-side projected section of the projected reflecting portion relative to the bottom-side reflecting portion at 95° or smaller, in comparison to a configuration in which the angle is set larger than 95°, the projected reflecting portion can deliver higher light reflecting performance.
(4) The bottom-side reflecting portion may include a corner. The at least one projected reflecting portion may include a pair of projected reflecting portions projecting from edges of the bottom-side reflecting portion which define the corner. A first projected reflecting portion of the pair of projected reflecting portions may be angled relative to the bottom-side reflecting portion with a constant angle. A second projected reflecting portion of the pair of projected reflecting portions may include the base-side projected section angled relative to the bottom-side reflecting portion with the angle that is larger than the angle of the distal end-side projected section relative to the bottom-side reflecting portion. The distal end-side projected section may include an overlapping protrusion that protrudes toward the first projected reflecting portion to overlap the first projected reflecting portion. As described above, the second projected reflecting portion of the pair of the projected reflecting portions may include the base-side projected section, the angle of which relative to the bottom-side reflecting portion is larger than the angle of the distal end-side section relative to the bottom-side reflecting portion. The distal end-side projected section of the second projected reflecting portion may include the overlapping protrusion that protrudes toward the first projected reflecting portion to overlap the first projected reflecting portion. According to the configuration, a gap that is created between the first projected reflecting portion and the second projected reflecting portion can be closed with the overlapping protrusion. Therefore, a light leakage through the gap is less likely to occur. Furthermore, the projected reflecting portions have high shape stability. Therefore, this configuration is preferable for reducing the uneven brightness.
(5) The at least one projected reflecting portion may include projected reflecting portions disposed in a loop to surround the bottom-side reflecting portion. The projected reflecting portions may include base-side projected sections and distal end-side projected sections. An angle of the base-side projected sections relative to the bottom-side reflecting portion may be larger than an angle of the distal end-side projected sections. Namely, the angle of the base-side projected section of each projected reflecting portion of the projected reflecting portions that are disposed in the loop to surround the bottom-side reflecting portion relative to the bottom-side reflecting portion is larger than the angle of the distal end-side projected section of the projected reflecting portion relative to the bottom-side reflecting portion. Therefore, positions of projecting bases of the projected reflecting portions can be set closer to ends of the lighting device and thus the light source can be disposed further closer to the ends of the lighting device. According to the configuration, the uneven brightness can be further property reduced. Furthermore, the dark spot is less likely to be produced on the base side of each projected reflecting portion. This configuration is further preferable for reducing the uneven brightness.
(6) The chassis may include side portions that project from the bottom portion toward the light exiting side. The side portions may be angled relative to the bottom portion. According to the configuration, the figure of the lighting device appears to be thin, that is, the lighting device has a good appearance.
(7) The side portions may be angled relative to the bottom portion with an angle that is larger than the angle of the distal end-side projected section of the projected reflecting portion relative to the bottom-side reflecting portion. According to the configuration, the side portions are less likely to contact the projected reflecting portion and space is provided between the projected reflecting portion and the side portions.
(8) The distal end-side projected section of the projected reflecting portion may have a creepage distance larger than a creepage distance of the base-side projected section of the projected reflecting portion. According to the configuration, the light rays are efficiently directed toward the end of the lighting device by the distal end-side projected section of the projected reflecting portion angled relative to the bottom-side reflecting portion with the relatively small angle. This configuration is preferable for reducing the uneven brightness.
(9) The projected reflecting portion may include a boundary between the base-side projected section and the distal end-side projected section. A height at which the boundary between the base-side projected section and the distal end-side projected section is set is constant for an entire area. According to the configuration, the shape of the projected reflecting portion is simplified. Therefore, the reflection member can be easily produced or designed.

To solve the second problem described earlier, a lighting device according to the second invention includes light sources, multiple light source boards, a chassis, multiple power feeding portions, a reflection member, and an elevated section. The light sources are mounted on the light source boards. The chassis includes a bottom portion on an opposite side from a light emitting surface side of the light sources relative to the light source boards. The light source boards are arranged along the bottom portion of the chassis. The power feeding portions are disposed on the light source boards and arranged in lines along the bottom portion. The reflection member includes a bottom-side reflecting portion that is disposed to cover the light source boards. The reflection member is configured to reflect light rays from the light sources. The elevated section is formed by elevating a section of the bottom-side reflecting portion to an opposite side from the light source board side. The elevated section bends along folding lines parallel to a direction in which the power feeding portions are arranged. The elevated section collectively covers the power feeding portions.

The light rays exit the light sources mounted on the light source boards through the light emitting surfaces may be reflected by the bottom-side reflecting portion of the reflection member and exit to the outside. The power is fed to the light source boards via the power feeding portions arranged in lines along the bottom portion. The bottom-side reflecting portion includes the elevated section that is formed by elevating the section of the bottom-side reflecting portion to the opposite side from the light source board side. The power feeding portions are covered with the elevated section. In comparison to a configuration in which the bottom-side reflecting portion includes holes for passing the power feeding portions, light reflecting efficiency is less likely to be locally reduced and thus the uneven brightness is less likely to occur. Furthermore, the elevated section that bends along the folding lines parallel to the direction in which the power feeding portions are arranged collectively covers the power feeding portions. The elevated section can be easily formed through bending processing performed on the bottom-side reflecting portion. In comparison to prepare the elevated section using a vacuum forming method, it is preferable for reducing a production cost related to the reflection member. In comparison to a configuration in which elevated sections are provided for the power feeing portions, respectively, the shape of the bottom-side reflecting portion does not become complicated, that is, the shape is simple. This configuration has advantages not only in easiness of production of the reflection member but also in reduction of the uneven brightness because the bottom-side reflecting portion is less likely to have an area that is in the shadow of the elevated section. If the elevated sections are provided for the power feeding portions, respectively, positioning of the elevated sections relative to the respective power feeding portions may be required during attachment of the reflection member. In comparison to such a configuration, the reflection member having the configuration described above can be more easily attached.

Preferable embodiments of the lighting device according to the second invention may include the following configurations.
(1) The reflection member may include a projected reflecting portion that project from the bottom-side reflecting portion toward the light exiting side. The projected reflecting portion is separated from the elevated section of the bottom-side reflecting portion. According to the configuration, when the elevated section that is the section of the bottom-side reflecting portion is formed by performing bending processing on the reflection member that is that is in a developed state, the projected reflecting portions is less likely to deform under the influence of the formation of the elevated section. The elevated section can be easily formed through the bending processing. In comparison to the elevated section that is formed using the vacuum forming method, this configuration is more preferable for reducing the production cost related to the reflection member.
(2) The projected reflecting portion includes a pair of projected reflecting sections that include second separating edges that continue into first separating edges. The first separating edges are separated from the elevated section. The projected reflecting sections include areas that include the second separating edges and overlap each other. If the projected reflecting portion has a non-divisional configuration, a process for folding the projected reflecting portion may be required in accordance with the formation of the elevated section. According to the projected reflecting portion that is described above, it is only necessary to place the areas of the projected reflecting sections that are prepared by dividing the projected reflecting portion such that the second separating edges continue into the first separating edges to overlap each other. This configuration is preferable for stably maintaining the shape of the projected reflecting portion. According to the configuration, the projected reflecting portion can stably deliver light reflecting performance.
(3) The projected reflecting sections may include a first projected reflecting section and a second projected reflecting section. The first projected reflecting section may include the first separating edges and the second separating edge. The second projected reflecting section includes the second separating edge. According to the configuration, the first projected reflecting section of the pair of the projected reflecting sections is separated from the elevated section of the bottom-side reflecting portion but the second projected reflecting section of the projected reflecting sections is not separated from the bottom-side reflecting portion. Therefore, an expected deformation is less likely to occur in the second projected reflecting section.
(4) The reflection member may include a pair of reflection member sections. The reflection member sections are prepared by dividing the reflection member such that the reflection member sections include fourth separating edges that continue into third separating edges that are separated from the projected reflecting portion and areas of the reflection member sections including the fourth separating edges overlap each other. According to the configuration, the reflection member sections can be individually handled in the production. Namely, this configuration provides easiness in assembly work.
(5) The pair of reflection member sections may include a first reflection member section and a second reflection member section. The first reflection member section may include the third separating edges and the fourth separating edge. The second reflection member section may include the fourth separating edge. According to the configuration, a section of the bottom-side reflecting portion of the first reflection member section of the pair of the reflection member sections is separated from the projected reflecting portion but a section of the bottom-side reflecting portion of the second reflection member section is not separated from the projected reflecting portion. According to the configuration, unexpected deformation is less likely to occur in the section of the bottom-side reflecting portion of the second reflection member section, which continues into the projected reflecting portion without separation from the projected reflecting portion.
(6) The lighting device may include fixing members that penetrate the bottom-side reflection member and the bottom portion to fix the reflection member to the chassis. Some of the fixing members may penetrate overlapping sections of the reflection member sections. According to the configuration, in comparison to a configuration in which the reflection member sections are fixed with different fixing members, the number of the fixing members can be reduced and the number of steps of attaching the fixing members can be reduced. This configuration has an advantage in productivity.
(7) At least one of the bottom-side reflecting portion and the projected reflecting portion of the reflection member may have a non-divided configuration. According to the configuration, in comparison to a reflection member having a divided configuration, the number of parts related to the lighting device can be reduced. This configuration has an advantage in parts management.

A display device according to the present invention includes the lighting device according to the first invention or the lighting device according to the second invention described above and a display panel configured to display images using light from the lighting device. Because the uneven brightness that may occur in the light exiting from the lighting device is reduced, the display device having such a configuration can display images with high display quality.

A television device according to the present invention includes the display device described above. Because the display device is provided with the high display quality, the television device having such a configuration can display television images with high display quality.

### Advantageous Effect of the Invention

According to the present invention, the uneven brightness can be reduced.

### BRIEF DESCRIPTION OF THE DRAWINGS

FIG. 1 is an exploded perspective view illustrating a schematic configuration of a television device according to a first embodiment of the present invention.
FIG. 2 is an exploded perspective view illustrating a schematic configuration of a liquid crystal display device included in the television device.
FIG. 3 is a plan view of a backlight unit included in the liquid crystal display device.
FIG. 4 is a cross-sectional view illustrating a cross-sectional configuration of the liquid crystal display device along a long direction of the liquid crystal display device.
FIG. 5 is a cross-sectional view illustrating a cross-sectional configuration of the liquid crystal display device along a short direction of the liquid crystal display device.
FIG. 6 is a cross-sectional view illustrating a cross-sectional configuration of an edge section of the liquid crystal display device along a long direction of the liquid crystal display device.
FIG. 7 is a cross-sectional view illustrating a cross-sectional configuration of an edge section of the liquid crystal display device along a short direction of the liquid crystal display device.
FIG. 8 is a plan view illustrating brightness distributions of exiting light from a backlight unit of comparative example 1 in comparative experiment 1.
FIG. 9 is a plan view illustrating brightness distributions of exiting light from a backlight unit of embodiment 1 in comparative experiment 1.
FIG. 10 is a graph illustrating a relationship between an angle of a base-side projected section and a height of the base-side projected section in comparative experiment 2.
FIG. 11 is a plan view of a reflection sheet according to a second embodiment of the present invention.
FIG. 12 is a plan view of a corner of the reflection sheet.
FIG. 13 is a perspective view of the corner of the reflection sheet.
FIG. 14 is a plan view of the reflection sheet that is in a developed state.
FIG. 15 is a plan view of a corner of the reflection sheet that is in the developed state.
FIG. 16 is a perspective view of a backlight unit according to a third embodiment of the present invention.
FIG. 17 is a cross-sectional view illustrating a cross-sectional configuration of an edge section of the liquid crystal display device cut along the short direction of the liquid crystal display device.
FIG. 18 is a cross-sectional view illustrating a cross-sectional configuration of an edge section of a liquid crystal display device according to a fourth embodiment of the present invention along a long direction of the liquid crystal display device.
FIG. 19 is a cross-sectional view illustrating a cross-sectional configuration of an edge section of a liquid crystal display device according to a fifth embodiment of the present invention along a long direction of the liquid crystal display device.
FIG. 20 is a plan view of a backlight unit according to a sixth embodiment of the present invention.
FIG. 21 is a cross-sectional view illustrating a cross-sectional configuration of the liquid crystal display device along a long direction of the liquid crystal display device.
FIG. 22 is a plan view of a middle section of a backlight unit with respect to a long direction of the backlight unit.
FIG. 23 is a magnified plan view of a section of FIG. 22 including a long projected reflecting portion.
FIG. 24 is a magnified cross-sectional view of a section of FIG. 21 including an elevated section and inter-board connectors.
FIG. 25 is a plan view of a reflection sheet that is in a developed state.
FIG. 26 is a plan view illustrating brightness distributions of exiting light from a backlight unit of comparative example 2 in comparative experiment 3.
FIG. 27 is a plan view illustrating brightness distributions of exiting light from a backlight unit of embodiment 2 in comparative experiment 3.
FIG. 28 is a plan view of a backlight unit according to a seventh embodiment of the present invention.
FIG. 29 is a cross-sectional view illustrating a cross-sectional configuration of a liquid crystal display device cut along a long direction of the liquid crystal display device.
FIG. 30 is a plan view of a reflection sheet that is in a developed state.
FIG. 31 is a cross-sectional view of a middle section of a liquid crystal display device with respect to a long direction of the liquid crystal display device according to an eighth embodiment of the present invention.
FIG. 32 is a cross-sectional of a middle section of a liquid crystal display device with respect to a long direction of the liquid crystal display device according to a ninth embodiment of the present invention.
FIG. 33 is a cross-sectional of a middle section of a liquid crystal display device with respect to a long direction of the liquid crystal display device according to a tenth embodiment of the present invention.
FIG. 34 is a cross-sectional view illustrating a cross-sectional configuration of a liquid crystal display device cut along a long direction of the liquid crystal display device according to an eleventh embodiment of the present invention.
FIG. 35 is a magnified plan view of a section of a backlight unit including sections of LED boards including connectors inside a chassis.
FIG. 36 is a plan view of a reflection sheet that is in a developed state according to a twelfth embodiment of the present invention.
FIG. 37 is a plan view of a reflection sheet that is in a developed state according to a thirteenth embodiment of the present invention.
FIG. 38 is a plan view of a reflection sheet that is in a developed state according to a fourteenth embodiment of the present invention.
FIG. 39 is a cross-sectional view illustrating a cross-sectional configuration of an edge section of a liquid crystal display device along a long direction of the liquid crystal display device according to a fifteenth embodiment of the present invention.

### MODE FOR CARRYING OUT THE INVENTION

### <First Embodiment>

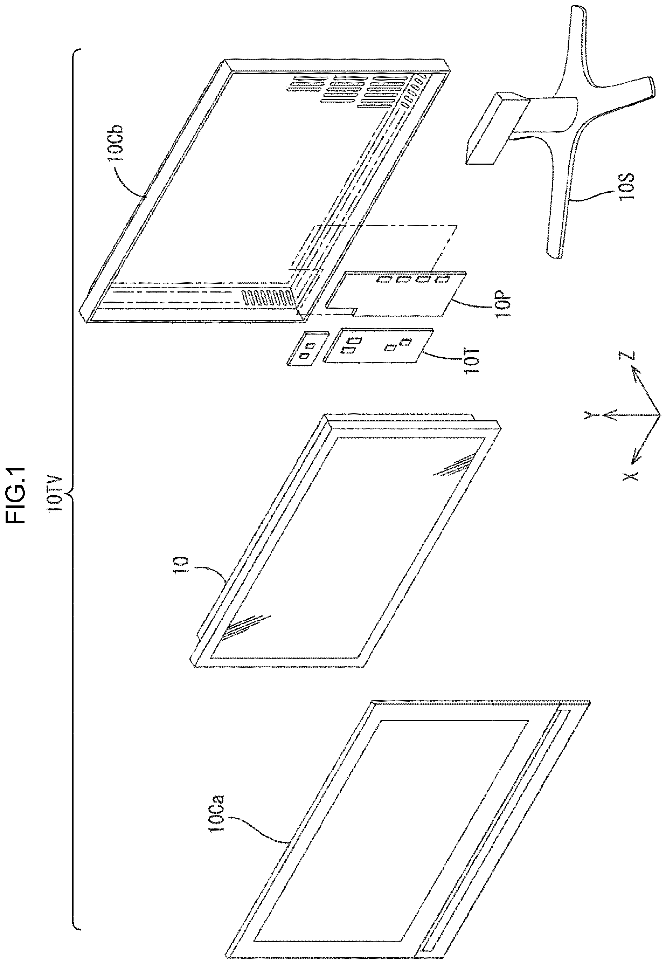

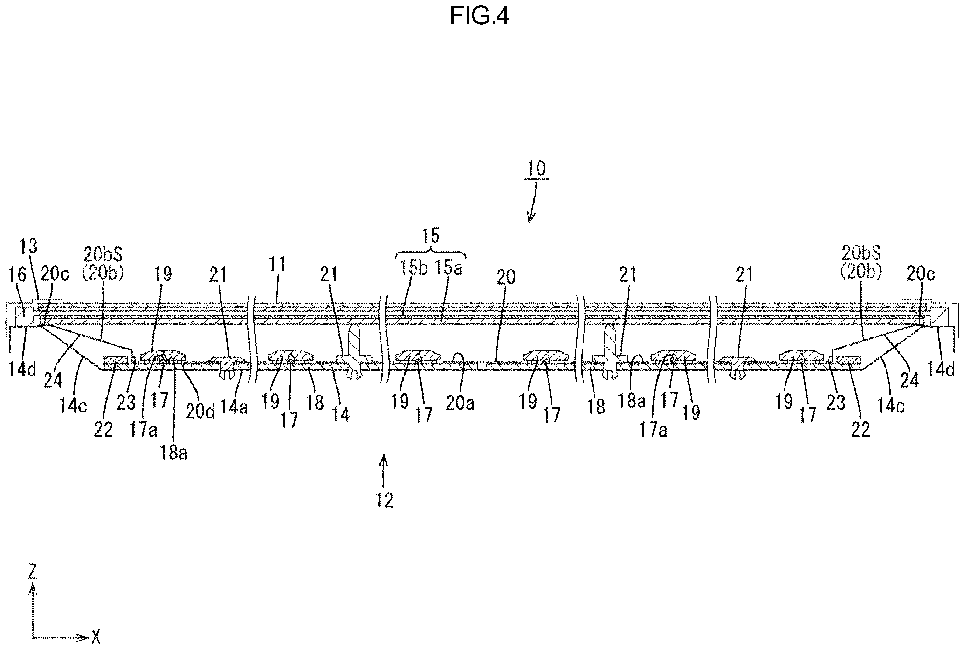

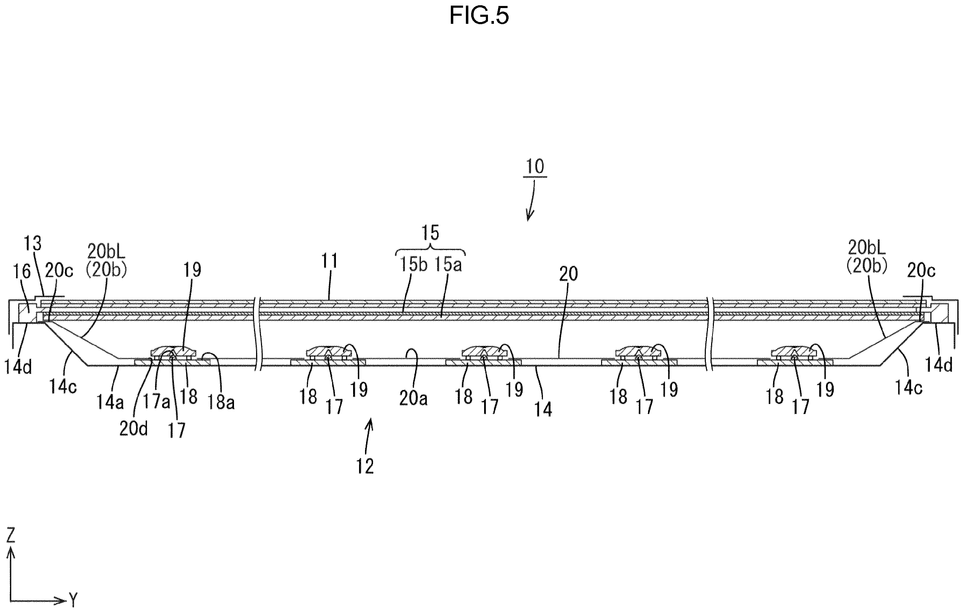

A first embodiment of the present invention will be described with reference to FIGS. 1 to 10. In this section, a television device 10TV, a liquid crystal display device 10 included in the television device 10TV, and a backlight unit 12 included in the liquid crystal display device 10 will be described. X-axes, Y-axes, and Z-axes may be present in the drawings. The axes in each drawing correspond to the respective axes in other drawings to indicate the respective directions. An upper side and a lower side in FIGS. 4 and 5 correspond to a front side and a rear side of the liquid crystal display device 10, respectively.

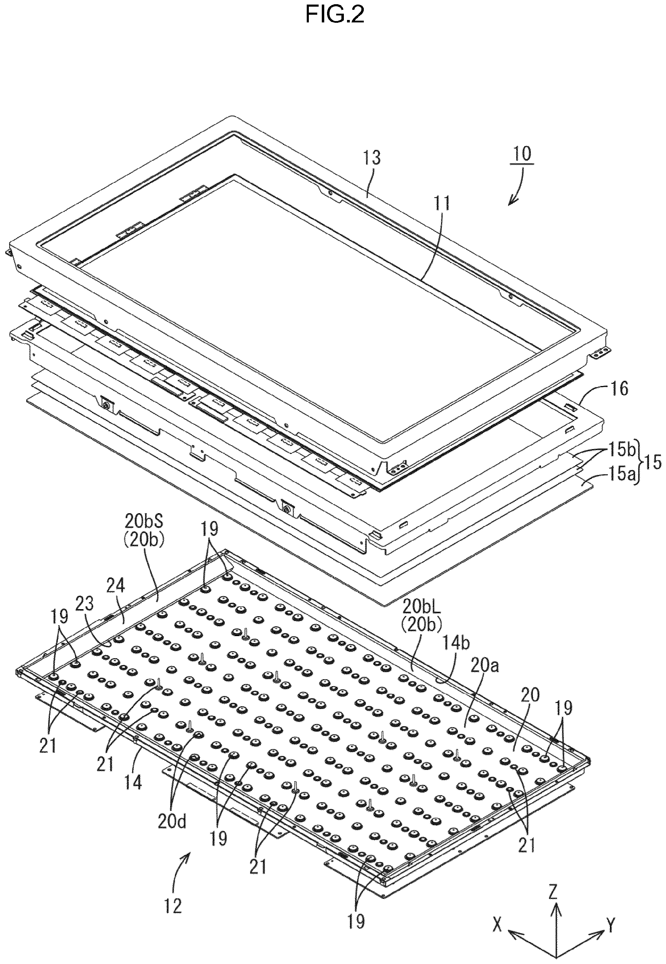

As illustrated in FIG. 1, the television device 10TV according to this embodiment includes the liquid crystal display device 10, a front cabinet 10Ca, a rear cabinet 10Cb, a power supply 10P, a tuner 10T (a receiver), and a stand 10S. The front cabinet 10Ca and the rear cabinet 10Cb sandwich the liquid crystal display device 10 to hold the liquid crystal display device 10. The tuner 10T is configured to receive TV signals. The liquid crystal display device 10 (the display device) has a horizontally-long rectangular overall shape elongated in the horizontal direction. The liquid crystal display device 10 is held in a vertical position. As illustrated in FIG. 2, the liquid crystal display device 10 includes a liquid crystal panel 11 and the backlight unit 12 (the lighting device) . The liquid crystal panel 11 is a display panel configured to display images . The backlight unit 12 is an external light source configured to supply light for image display to the liquid crystal panel 11. A bezel 13 having a frame shape collectively holds the liquid crystal panel 11 and the lighting unit 12.

Next, the liquid crystal panel 11 and the backlight unit 12 included in the liquid crystal display device 10 will be described in sequence. The liquid crystal panel 11 (the display panel) has a horizontally-long rectangular shape in a plan view. The liquid crystal panel 11 includes a pair of glass substrates and a liquid crystal layer (not illustrated). The glass substrates are separated from each other with a predefined gap and bonded to each other. The liquid crystal layer is enclosed between the glass substrates. The liquid crystal layer includes liquid crystals having optical properties that vary according to application of an electric filed. On one of the glass substrates (an array substrate, an active matrix substrate), switching components (e.g., TFTs) and pixel electrodes are two-dimensionally arranged in a matrix and an alignment film is formed. The switching components are connected to source lines and gate lines that are perpendicular to one another. The pixel electrodes are disposed in rectangular areas defined by the source lines and the gate lines and connected to the switching components. On the other glass substrate (a counter substrate, a CF substrate), color filters, a light blocking layer (a black matrix), counter electrodes, and an alignment films are formed. The color filters include red (R), green (G), and blue (B) color portions two-dimensionally arranged in a matrix with predefined arrangement. The light blocking layer is formed in a grid solid pattern among the color portions to be opposed to the pixel electrodes. Polarizing plates are disposed on outer surfaces of the glass substrates. Long sides of the liquid crystal panel 11 are along the X-axis direction and short sides of the liquid crystal panel 11 are along the Y-axis direction. Furthermore, a thickness of the liquid crystal panel 11 measures in the Z-axis direction.

The backlight unit 12 will be described in detail. As illustrated in FIG. 2, the backlight unit 12 includes a chassis 14, optical members 15, and a frame 16. The chassis 14 has a box-like shape with a light exiting portion 14b (an opening portion) includes an opening on the front side (a liquid crystal panel 11 side, a light exiting side) . The optical members 15 are disposed to cover the light exiting portion 14b of the chassis 14. The frame 16 is disposed between peripheral edges of the optical members 15. The backlight unit 12 further includes LEDs 17 (light sources), LED boards 18, diffuser lenses 19 (light sources), a reflection sheet 20 (a light reflection member), and fixing members 21 in the chassis 14. The LEDs 17 are mounted on the LED boards 18. The diffuser lenses 19 are mounted to the LED boards 18 at positions corresponding to the LEDs 17. The reflection sheet 20 is configured to reflect light rays inside the chassis 14. The fixing members 21 are for fixing the LED boards 18 and the reflection sheet 20 to the chassis 14. The backlight unit 12 in this embodiment is a so-called direct backlight including the LEDs 17 that are disposed immediately behind the liquid crystal panel 11 and the optical members 15. The LEDs 17 are disposed such that light emitting surfaces 17a of the LEDs17 are opposed to the liquid crystal panel 11 and the optical members 15. Components of the backlight unit 12 will be described in detail. An optical distance in the backlight unit 12 in this embodiment (specifically, an optical distance that is defined based on a distance between a bottom-side light reflecting portion of the reflection sheet 20 and the optical member 15) is, but not limited to, in a range from 10 mm to 40 mm.

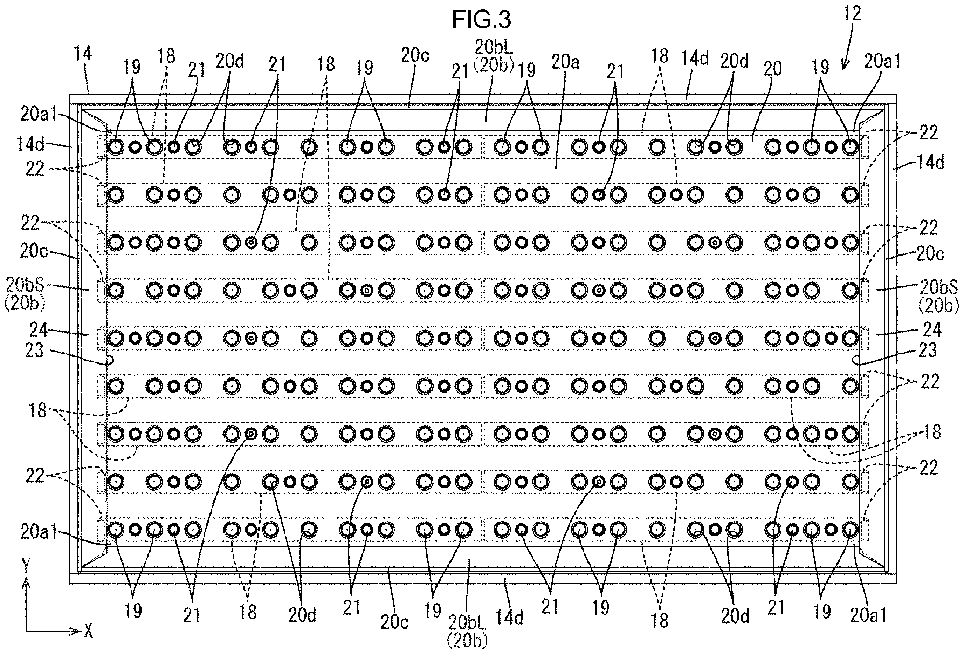

The chassis 14 is formed from a sheet metal such as an aluminum sheet and an electro galvanized steel sheet (SECC). As illustrated in FIGS. 3 to 5, the chassis 14 has a shallow box-like overall shape (a tray-like overall shape) with an opening on the front side. The chassis 14 includes a bottom plate 14a (a bottom portion), side plates 14c (side portions), and receiving plates 14d (receiving portions). The bottom plate 14a has a horizontally-long rectangular shape similar to that of the liquid crystal panel 11. The side plates 14c project upward from outer edges of the bottom plate 14a. The receiving plates 14d project outward from distal ends of the side plates 14c, respectively. The chassis 14 is orientated with the long direction thereof corresponding with the X-axis direction and the short direction thereof corresponding with the Y-axis direction. The bottom plate 14a of the chassis 14 is disposed behind the LED boards 18, that is, on an opposite side from the light emitting surface 17a side (the light exiting side) with respect to the LEDs 17. The bottom plate 14a includes four corners at ends with respect to the short direction and the long direction. The side plates 14c project frontward from peripheral edges of the bottom plate 14a. The peripheral edges include two long peripheral edges and two short peripheral edges that define the corners. The side plates 14c are angled relative to the bottom plate 14a. Four side plates 14c form a bell shape as a whole such that a size of a space defined by the side plates 14c increases toward an opening on the front side (the light exiting portion 14b side). According to the configuration, the figures of the liquid crystal display device 10 and the television device 10TV appear to be thin, that is, the liquid crystal display device 10 and the television device 10TV have good appearances. The frame 16 and the optical members 15, which will be described next, can be placed on the receiving plates 14d from the front side. The frame 16 is screwed to the receiving plates 14d.

As illustrated in FIG. 2, the optical members 15 have a horizontally-long rectangular shape in a plan view similar to the liquid crystal panel 11 and the chassis 14. As illustrated in FIGS. 4 and 5, peripheral edges of the optical members 15 are placed on the receiving plates 14d. The optical members 15 are disposed between the liquid crystal panel 11 and the LEDs 17 to cover the light exiting portion 14b of the chassis 14. Namely, the optical members 15 are disposed on the front side, that is, the light exiting side relative to the LEDs 17 such that the optical members 15 are opposed to the LEDs 17 with a predefined gap. The optical members 15 include a diffuser plate 15a and optical sheets 15b. The diffuser plate 15a is disposed on a rear side (the LED 17 side, an opposite side from the light exiting side). The optical sheets 15b are disposed on the front side (the liquid crystal panel 11 side, the light exiting side). The diffuser plate 15a includes a substantially transparent resin base that has a predefined thickness and diffusing particles that are dispersed in the base. The diffuser plate 15a has a function of diffusing light rays that pass through the diffuser plate 15a. The optical sheets 15b are formed in a sheet shape with a thickness that is smaller than the thickness of the diffuser plate 15a. Two optical sheets 15 may be laminated. The optical sheets 15b may be selected from a diffuser sheet, a lens sheet, and a reflective type polarizing sheet.

As illustrated in FIG. 2, the frame 16 has a frame shape along the peripheral edges of the liquid crystal panel 11 and the optical members 15. The peripheral edges of the optical members 15 are sandwiched between the frame 16 and the receiving plates 14d (see FIGS. 4 and 5). The frame 16 receives the peripheral edges of the liquid crystal panel 11 from the rear side. The peripheral edges of the liquid crystal panel 11 are sandwiched between the frame 16 and the bezel 13 that is disposed on the front side (see FIGS. 4 and 5).

Next, the LEDs 17 and the LED boards 18 on which the LEDs 17 are mounted will be described. As illustrated in FIGS. 4 and 5, the LEDs 17 are surface-mounted on the LED boards 18. The LEDs 17 including the light emitting surfaces 17a that face opposite sides from the LED boards 18 are so-called top emitting LEDs. The LEDs 17 have positional relationships with a plate surface of the optical member 15 such that light emitting surfaces 17a are opposed to the plate surface. The LEDs 17 include substrates and LED chips (LED components) which are semiconductor light emitting components sealed with resins on the substrates. The substrates are bonded to plate surfaces of the LED boards 18. The LED chips mounted on the substrates emit light rays with a single kind of main emission wavelength, specifically, in a single color of blue. In the resins that seal the LED chips, phosphors configured to emit light rays in a predefined color when excited by blue light rays emitted by the LED chips are dispersed. Therefore, overall color of light emitted by the LEDs 17 is substantially white.

As illustrated in FIGS. 3 to 5, the LED boards 18 have a horizontally-long rectangular shape. The LED boards 18 are held in the chassis 14 with the long direction (a length direction) and the short direction (a width direction) corresponding with the X-axis direction and the Y-axis direction to extend along the bottom plate 14a. The bases of the LED boards 18 are made of metal, for example, aluminum-based material, which is the same material as that of the chassis 14. Wiring traces (not illustrated) are formed on surfaces of the bases via insulating layers. The wiring traces are formed from metal films such as copper foils. Reflective layers in white (not illustrated) are formed on the outermost surfaces. With the reflective layers, light rays emitted by the LEDs 17 and returned toward the LED boards 18 are reflected. The reflected light rays are directed toward the front side and used as emitting light. An insulating material such as ceramic may be used for the material of the bases of the LED boards 18. The LEDs 17 having the above-described configuration are surface-mounted on plate surfaces of the bases of the LED boards 18 facing the front side (facing the plate surface of the optical member 15, that is, the surfaces are defined as mounting surfaces 18a. The LEDs 17 are linearly arranged along the long direction of the LED boards 18 (the X-axis direction) and connected in series via the wiring traces formed on the LED boards 18. Specifically, ten LEDs 17 are linearly arranged at intervals that are constant (i.e., at equal intervals) on each LED board 18.

As illustrated in FIG. 3, the LED boards 18 having the above configuration are oriented such that the long direction and the short direction of the LED boards 18 are along the X-axis direction and the Y-axis direction, respectively, and disposed in the chassis 14. Specifically, eighteen LED boards 18 are arranged in rows and columns, that is, two in the X-axis direction by nine in the Y-axis direction. Intervals in the Y-axis direction are substantially constant. Within a plane of the bottom plate 14a of the chassis 14, the LEDs 17 are arranged in rows and columns with respect to the X-axis direction and the Y-axis direction (in a matrix) . Multiple LEDs 17 are included in each of the rows and each of the columns. The LED boards 18 include through holes through which the fixing members 21 are passed. The through holes are arranged at positions corresponding to mounting positions of the fixing members 21 (see FIGS. 4 and 5), which will be described later.

As illustrated in FIGS. 3 and 4, the LED boards 18 include connectors 22 (power feeding portions) for feeding power to the LEDs 17. The connectors 22 are surface-mounted on the mounting surface 18a. Each connector 22 is disposed at one of ends of each LED board 18 with respect to the long direction (the X-axis direction). The LEDs 17 and the connector 22 are mounted on one of the plate surfaces of each LED board 18. Namely, the LED boards 18 are single-surface mounting type LED boards. In comparison to double-surface mounting type LED boards, a production cost of the LED boards 18 is lower. The LED boards 18 are arranged such that the ends of the LED boards 18 in the long direction on which the connectors 22 are mounted are located at ends of the chassis 14 in the long direction and the ends of the LED boards 18 on which the connectors 22 are not mounted are located in the middle of the chassis 14 with respect to the long direction. The connectors 22 are linearly arranged along the Y-axis direction at the ends of the chassis 14 with respect to the long direction. Wiring members, which are not illustrated, are connected to the connectors 22. Driving power is fed to the connectors 22 from an LED driver board (a light source driver board), which are not illustrated, via the wiring members . Namely, the connectors 22 are "wired to board" type connectors. The wiring traces are turned around at the ends of the LED boards 18 on the opposite side from the side on which the connectors 22 are provided. A height of the connectors 22 in this embodiment (a dimension measuring in the Z-axis direction) is, but not limited to, about 1.5 mm. The height of the connectors 22 is significantly smaller than the optical distance, which is described earlier.

The diffuser lenses 19 are made of substantially transparent synthetic resin material (having high light transmissivity) and having a refractive index that is higher than the refractive index of the air (e.g., polycarbonate and acrylic) . As illustrated in FIGS. 3 and 4, the diffuser lenses 19 have a predefined thickness and a round shape in a plan view. The diffuser lenses 19 are mounted to the LED boards 18 to cover the respective LEDs 17 from the front side (the light exiting side), that is, disposed over the respective LEDs 17 in the plan view. Each diffuser lens 19 is opposed to the light emitting surface 17a of the corresponding LED 17. A section of the diffuser lens 19 which is opposed to the light emitting surface 17a of the corresponding LED 17 is concaved. The diffuser lenses 19 are configured to diffuse the light rays that are emitted by the LEDs 17 with high directivity and to release the diffused light rays to the outside. Namely, the directivity of the light rays that are emitted by the LEDs 17 is reduced by the diffuser lenses 19. Therefore, an area between the adjacent LEDs 17 is less likely to be viewed as a dark spot even if a distance between the adjacent LEDs 17 is large. According to the configuration, not only an occurrence of uneven brightness is reduced but also the number of the LEDs 17 can be reduced. Each diffuser lens 19 is substantially concentric with the corresponding LED 17 in the plan view.

The reflection sheet 20 has a surface that exhibits white having high light reflectivity. As illustrated in FIGS. 2 to 5, the reflection sheet 20 has a size to cover a substantially entire inner surface of the chassis 14, namely, to collectively cover all LED boards 18 that are two-dimensionally arranged along the bottom plate 14a. With the reflection sheet 20, the light rays inside the chassis 14 are reflected toward the front side (the light exiting side, the optical member 15 side). The reflection sheet 20 has a bowl-like overall shape. The reflection sheet 20 includes a bottom-side reflecting portion 20a, four projected reflecting portions 20b, and extended portions 20c (peripheral edge portions) . The bottom-side reflecting portion 20a extends along the LED boards 18 and the bottom plate 14a. The bottom-side reflecting portion 20a has a size to collectively cover about entire areas of the LED boards 18. The projected reflecting portions 20b project from the outer edges of the bottom-side reflecting portion 20a toward the front side. The projected reflecting portions 20b are angled relative to the bottom-side reflecting portion 20a at least in part. The extended portions 20c extend outward from outer edges of the projected reflecting portions 20b, respectively. The extended portions 20c are placed on the receiving plates 14d of the sides 14c of the chassis 14.

As illustrated in FIGS. 4 and 5, the bottom-side reflecting portion 20a of the reflection sheet 20 is disposed over the front surfaces of the LED boards 18, that is, the mounting surfaces 18a of the LED boards 18 on which the LEDs 17 are mounted on the front side. The bottom-side reflecting portion 20a extends parallel to the plate surfaces of the bottom plate 14a of the chassis 14 and the optical member 15. A distance between the reflection sheet 20 and the optical member 15 in the Z-axis direction is substantially constant for the entire area of the bottom-side reflecting portion 20a. The bottom-side reflecting portion 20a includes insertion holes 20d at positions overlapping the LEDs 17 in the plan view, respectively. The insertion holes 20d are through holes in which the respective LEDs 17 and the respective diffuser lenses 19 are inserted. The insertion holes 20d are arranged in rows and columns along the X-axis direction and the Y-axis direction (in a matrix) corresponding to the arrangement of the LEDs 17 and the diffuser lenses 19. The bottom-side reflecting portion 20a includes holes that are through holes at positions overlapping the fixing members 21 in the plan view. The fixing members 21 are inserted in the holes. The bottom-side reflecting portion 20a is disposed to overlap the LEDs 17 in the plan view and in an "LED disposed area (light source disposed area)" in the chassis 14. The bottom-side reflecting portion 20a includes four corners 20a1 at ends of the bottom-side reflecting portion 20a with respect to the short direction and the long direction, that is, at corner positions of the bottom-side reflecting portion 20a.

As illustrated in FIGS. 3 to 5, four projected reflecting portions 20b project from the peripheral edges of the bottom-side reflecting portion 20a, that is, long edges and short edges that define the corners 20a1 toward the front side, respectively. The projected reflecting portions 20b include short edge-side projected reflecting portions 20bS on the short edge sides of the bottom-side reflecting portion. The short-side projected reflecting portions 20bS are disposed to overlap the connectors 22 of the LED boards 18 in the plan view. The connectors 22 are covered with the short-side projected reflecting portions from the front side. The short-side projected reflecting portions 20bS may be referred to as "connector overlapping projected reflecting portions (power feeding portion overlapping projected reflecting portions)" which overlap the connectors 22. Long-side projected reflecting portions of the projected reflecting portions 20b may be indicated with reference symbol 20bL and the short-side projected reflecting portions of the projected reflecting portions 20b may be indicated with reference symbol 20bS to distinguish the long-side projected reflecting portions and the short-side projected reflecting portions from each other. If it is not necessary to distinguish the long-side projected reflecting portions and the short-side projected reflecting portions from each other, reference symbol 20b without S or L is used. The projected reflecting portions 20b are disposed not to overlap the LEDs 17 when viewed in plan. The projected reflecting portions 20b are disposed in an "LED non-disposed area (a light source non-disposed area) in the chassis 14. The projected reflecting portions 20b disposed in the LED non-disposed area include at least sections that are angled relative to the bottom-side reflecting portion 20a. Therefore, the projected reflecting portions 20b can direct the reflected light rays with predefined angles. According to the configuration, the amount of light (a dark spot) is less likely to become insufficient in the LED non-disposed area. The extended portions 20c are sandwiched between the receiving plates 14d of the chassis 14 and the diffuser plate 15a of the optical members 15 and held. It is preferable to provide perforations (not illustrated) at boundaries among the reflection sheet 20 and the portions 20a to 20c for folding the portions 20a to 20c from a developed state. The reflection sheet 20 that is in the developed state is prepared by punching the reflection sheet 20 from a base material. The reflection sheet 20 that is in the developed state is folded along the perforations. According to the processing, the reflection sheet 20 can be easily formed in a three-dimensional shape.

The fixing members 21 are made of synthetic resin such as polycarbonate. The fixing members 21 have surfaces that exhibit white having high light reflectivity. As illustrated in FIGS. 4 and 5, each fixing member 21 includes at least a body and a fixing portion. The body is disposed along surfaces of the LED board 18 and the bottom-side reflecting portion 20a. The fixing portion protrudes from the body toward the rear side, that is, toward the bottom plate 14a of the chassis 14. The fixing portion is fixed to the bottom plate 14a. Multiple fixing members 21 are mounted to each LED board 18 to overlap the LED board 18. The fixing members 21 are adjacent to the specific LEDs 17 with respect to the X-axis direction. With the fixing members that are two-dimensionally arranged as described above, the LED boards 18 and the bottom-side reflecting portion 20a of the reflection sheet 20 are fixed to the bottom plate 14a of the chassis 14. Some of the fixing members 21 include supporting portions that protrude from the bodies and support the optical members 15 from the rear side.

In a conventional backlight unit, projected reflecting portions of a reflection sheet are angled relative to a bottom-side reflecting portion with a constant angle for an entire length. Therefore, positions of projecting bases of the projected reflecting portions depend on the angle of the projected reflecting portions relative to the bottom-side reflecting portion. There is limitation to bring LEDs at ends of LED boards on the connector sides closer to the ends of the backlight unit. According to the configuration, an amount of light supplied from the LEDs that are disposed at the ends of the LED boards to the ends of the backlight unit tends to be insufficient. Furthermore, the projected reflecting portions with the constant angle relative to the bottom-side reflecting portion for the entire periphery may include some areas in which an amount of reflected light is significantly small on the base side. Such areas may be recognized as dark spots.

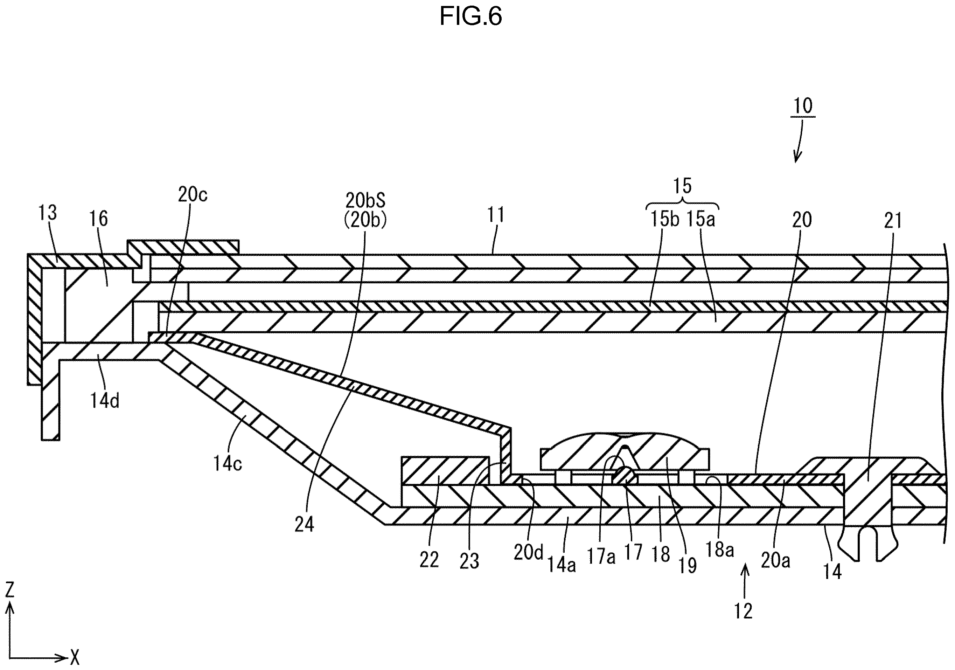

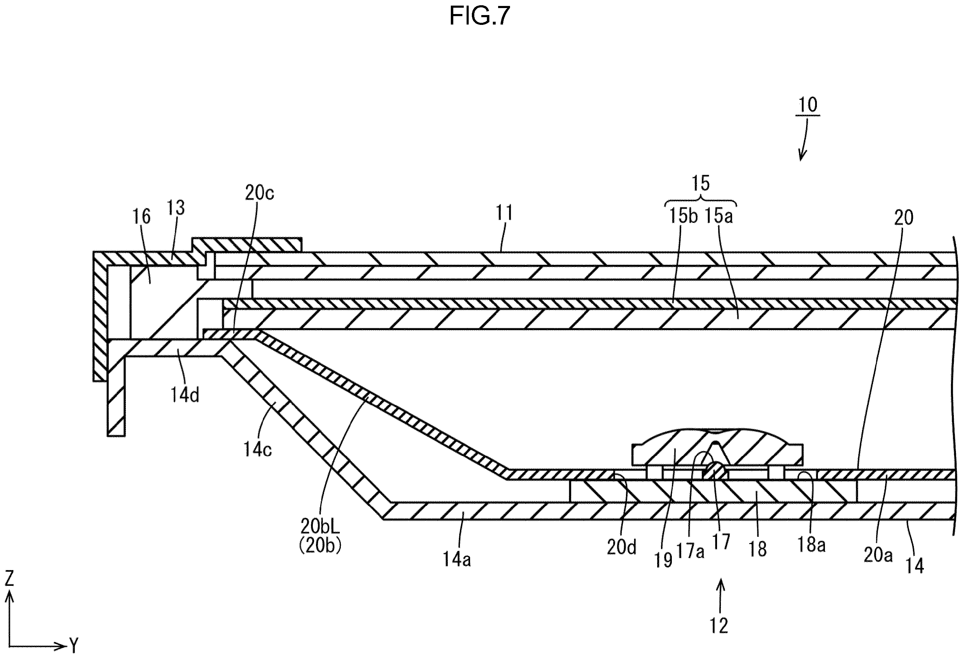

As illustrated in FIG. 6, the short-side projected reflecting portions 20bS of the reflection sheet 20 in this embodiment include base-side projected sections 23 and distal end-side projected sections 24. The base-side projected sections 23 are closer to the bottom-side reflecting portion 20a. The distal end-side projected sections 24 are farther from the bottom-side reflecting portion 20a. The base-side projected sections 23 are angled relative to the bottom-side reflecting portion 20a with a larger angle in comparison to the distal end-side projected portions 24. According to the configuration, in comparison to the conventional configuration in which the angle of the projected reflecting portions relative to the bottom-side reflecting portion is equal to the angle of the distal end-side projected sections relative to the bottom-side reflecting portion for the entire area, positions of the projecting bases of the short-side projected reflecting portions 20bS (the positions of the projecting bases of the base-side projected sections 23) can be set closer to the edge sections of the backlight unit 12. Therefore, the LEDs 17 the closest to the projected reflecting portions 20bS can be disposed further closer to the ends. A larger amount of light can be supplied from the LEDs 17 to the edge sections of the backlight unit 12. Therefore, a difference in the amount of emitting light between edge sections of the backlight unit 12 and the middle sections of the backlight unit 12 can be reduced and thus uneven brightness can be properly reduced. According to the conventional configuration in which the projected reflecting portions are angled relative to the bottom-side reflecting portion with the constant angle for the entire length, the short-side projected reflecting portions 20bS may include the areas in which the amount of reflected light is significantly small on the base side. Such areas may be recognized as dark spots. According to the configuration that is described above in which the projected reflecting portions 20bS include the distal end-side projected sections 24 and the base-side projected sections 23 that are angled relative to the bottom-side reflecting portion 20a with the larger angle in comparison to the distal end-side projected sections 24. Therefore, the dark spots are less likely to be produced and thus the uneven brightness can be properly reduced. The reduction of the uneven brightness may contribute to a reduction in thickness of the backlight unit 12. As illustrated in FIG. 7, long-side projected reflecting portions 20bL are angled relative to the bottom-side reflecting portion 20a with a constant angle for the entire length.

The projected reflecting portions 20bS that include the base-side projected sections 23 and the distal end-side projected sections 24 that are angled relative to the bottom-side reflecting portion 20a with the different angles (the angle of the former is larger than the angle of latter) are disposed to cover the connectors 22 of the LED boards 18. Specifically, the projected reflecting portions 20bS are configured such that a position of a distal end of each base-side projected section 23 (a position of a boundary between the base-side projected section 23 and the corresponding distal end-side projected section 24) is higher in the Z-axis direction than the connectors 22. Therefore, the projected reflecting portions 20bS are less likely to contact the connectors 22. If the positions of the projecting bases of the projected reflecting portions are set closer to the connectors while the angle of the projected reflecting portions remain constant as in the conventional configuration, the projected reflecting portions may contact the connectors. Therefore, holes may be formed in the projected reflecting portions for passing the connectors. However, such holes may result in dark spots due to leakage of light toward the connectors through the holes. The projected reflecting portions 20bs having the configuration described above can cover the connectors 22 without contact with the connectors 22 although the holes are not provided. Therefore, the optical reflectivity inside the backlight unit 12 is maintained constant and the dark spots due to a local reduction in amount of emitting light are less likely to be produced. The light rays are efficiently reflected by the projected reflecting portions 20bS. This configuration is more preferable for the reduction of the uneven brightness. Furthermore, higher light use efficiency can be achieved and thus this configuration is preferable for reducing the power consumption.

As illustrated in FIG. 6, the base-side projected sections 23 of the short-side projected reflecting portions 20bS which overlap the connectors 22 are angled relative to the bottom-side reflecting portion 20a with an angle of about 90° (a right angle). Namely, the base-side projected sections 23 of the projected reflecting portions 20bS are substantially perpendicular to the bottom-side reflecting portion 20a. The projecting bases of the base-side projected sections of the projected reflecting portions 20bS and the distal ends of the base-side projected sections 23 (the boundaries between the base-side projected sections 23 and the distal end-side projected sections 24) are located at substantially the same X-axis positions. The positions of the projecting bases of the projected reflecting portions 20bS are set the closest to the ends of the backlight unit 12 (the connectors 22). Therefore, a further larger amount of light can be supplied from the LEDs 17 to the edge sections of the backlight unit 12. According to the configuration, the difference in the amount of emitting light between the edge sections of the backlight unit 12 and the middle sections of the backlight unit 12 is further properly reduced and thus the uneven brightness is further properly reduced. Specifically, it is preferable to set the angle of the base-side projected sections 23 of the projected reflecting portions 20bS relative to the bottom-side reflecting portion 20a in a range from 85° to 95°. According to the configuration, in comparison to the angle that is smaller than 85°, the LEDs 17 can be disposed further closer to the ends of the backlight unit 12. This configuration is more preferable for reducing the uneven brightness. Furthermore, the base-side projected sections 23 of the projected reflecting portions 20bS have a height that is sufficient to cover the connectors 22. Therefore, the base-side projected sections 23 are less likely to contact the connectors 22. In comparison to the angle that is larger than 95°, the projected reflecting portions 20bS can more properly deliver light reflecting performance (specifically, properties related to adjustment of angles of the reflected light rays from the LEDs 17 and the diffuser lenses 19). The distal end-side projected sections 24 of the projected reflecting portions 20bS are angled relative to the bottom-side reflecting portion 20a with an acute angle, which is smaller than 90°. A distance between each distal end-side section 24 of the projected reflecting portions 20bS and the optical member 15 (the diffuser plate 15a) in the Z-axis direction continuously and gradually decrease from the position of the projecting base of the distal end-side projected section 24 (the boundary between the distal end-side projected section 24 and the base-side projected section 23) to the distal end.

As illustrated in FIG. 6, the distal end-side projected sections 24 of the short-side projected reflecting portions 20bS which overlap the connectors 22 are configured such that a creepage distance of each distal end-side projected section 24 is larger than a creepage distance of each base-side projected section 23. According to the configuration, the light rays are efficiently directed to the ends of the backlight unit 12 by the distal end-side projected sections 24 of the projected reflecting portions 20bS which are angled relative to the bottom-side reflecting portion 20a with the smaller angle. This configuration is preferable for reducing the uneven brightness. The boundaries between the base-side projected sections 23 and the distal end-side projected sections 24 of the projected reflecting portions 20bS are at the same height for the entire area. According to the configuration, the shape of the projected reflecting portions 20bS is simplified and thus the reflection sheet can be easily produced or designed.

As illustrated in FIG. 6, the side plates of the chassis 14 are angled relative to the bottom plate 14a with an angle that is larger than the angle of the distal end-side projected sections 24 of the short-side projected reflecting portions 20bS which overlap the connectors 22 relative to the bottom-side reflecting portion 20a. According to the configuration, the projected reflecting portions 20bS are less likely to contact the side plates 14c and sufficient spaces are provided therebetween.

This embodiment has the configuration that is described above. Next, actions and operation will be described. When the liquid crystal display device 10 is turned on, driving of the liquid crystal panel 11 is controlled by a panel control circuit on a control circuit board, which is not illustrated. Furthermore, driving of the LEDs 17 on the LED boards 18 is controlled by an LED driver circuit on an LED driver circuit board, which is not illustrated. As illustrated in FIGS. 4 and 5, the light rays from the LEDs 17 that are turned on are applied to the optical members 15 (the diffuser plate 15a and the optical sheets 15b) after diffused by the diffuser lenses 19 in wide angles. The light rays are applied to the liquid crystal panel 11 after predefined optical effects are exerted on the light rays by the optical members 15 and used for displaying images based on display pixels of the liquid crystal panel 11.

The function of the reflection sheet 20 will be described. As illustrated in FIGS. 4 and 5, the bottom-side reflecting portion 20a of the reflection sheet 20 is disposed to cover most of the bottom plate 14a of the chassis except for the edge sections. The reflection sheet 20 has a flat sheet shape parallel to the plate surface of the bottom plate 14a. Therefore, the reflection sheet 20 can reflect and direct the light rays that have returned to the rear side by the optical members 15 such as the diffuser plate 15a, the light rays that have returned to the rear side by the liquid crystal panel 11, and the light rays that have exited from the diffuser lenses 19 and traveled in directions angled relative to the frontward direction with angles larger than ±90° toward the optical members 15 on the front side. The projected reflecting portions 20b of the reflection sheet 20 project outer edges of the bottom plate 14a of the chassis 14 toward the front side and angled relative to the bottom plate 14a of the chassis 14. Therefore, the projected reflecting portions 20b of the reflection sheet 20 can reflect the light rays with angles to direct the light rays toward the ends of the backlight unit 12.

As illustrated in FIG. 6, the short-side projected reflecting portions 20bS in this embodiment include the base-side projected sections 23 that are angled relative to the bottom-side reflecting portion 20a with the angle that is larger than the angle of the distal end-side projected sections 24 relative to the bottom-side reflecting portion 20a. In comparison to the conventional configuration, the positions of the projecting bases of the projected reflecting portions 20bS are set closer to the ends of the backlight unit 12. Therefore, the LEDs 17 the closest to the projected reflecting portions 20bS are disposed further closer to the ends of the backlight unit 12. According to the arrangement of the LEDs 17 further closer to the ends of the backlight unit 12 with respect to the X-axis direction, a larger amount of the light rays that are emitted by the LEDs 17 and exit via the diffuser lenses 19 reach the edge sections of the backlight unit 12. Namely, with effective illumination areas (areas in which brightness regarding illumination light is equal to or higher than a specific level) of the LEDs 17 and the diffuser lenses 19 that are disposed at the ends with respect to the X-axis direction, the edge sections of the backlight unit 12 can be sufficiently covered. Therefore, the dark spots are less likely to be produced in the edge sections of the backlight unit 12. A difference between the amount of exiting light from the edge sections of the backlight unit 12 and the amount of exiting light from the middle sections of the backlight unit 12 is reduced. According to the configuration, the uneven brightness can be properly reduced. Furthermore, unlike the conventional configuration, the areas in which the amounts of reflected light rays are significantly small are less likely to be produced on the projecting base sides of the projected reflecting portions 20bS. Therefore, the uneven brightness can be further properly reduced.

The short-side projected reflecting portions 20bS include the base-side projected sections 23 that project substantially perpendicular to the bottom-side reflecting portion 20a and the distal end-side sections 24 that project at the acute angle relative to the bottom-side reflecting portion 20a. As illustrated in FIG. 6, the base-side projected sections 23 and the distal end-side sections 24 cover the connectors 22 of the LED boards 18 from the front side. Although the short-side projected reflecting portions 20bS do not include holes, the short-side projected reflecting portions 20bS are less likely to contact the connectors 22. Because the projected reflecting portions 20bS do not include the holes, the light reflectivity inside the backlight unit 12 is maintained uniform. Therefore, the dark spots that are the areas in which the amounts of light rays become smaller are less likely to be produced. Furthermore, the light rays are efficiently reflected by the projected reflecting portions 20bS. Therefore, this configuration is preferable for reducing the uneven brightness. Furthermore, this configuration exerts high light use efficiency and thus is preferable for reducing the power consumption. Because the base-side projected sections 23 of the short-side projected reflecting portions 20bS project substantially perpendicular to the bottom-side reflecting portion 20a, the positions of the projecting bases of the base-side projected sections 23 are set the closest to the ends of the backlight unit 12 (the connectors 22). Therefore, more light rays from the LEDs 17 are directed to the edge sections of the backlight unit 12 and thus the uneven brightness can be further reduced. Because the uneven brightness in the exiting light from the backlight unit 12 can be reduced, this configuration is preferable for reducing the thicknesses of the backlight unit 12, the liquid crystal display device 10, and the television device 10TV.

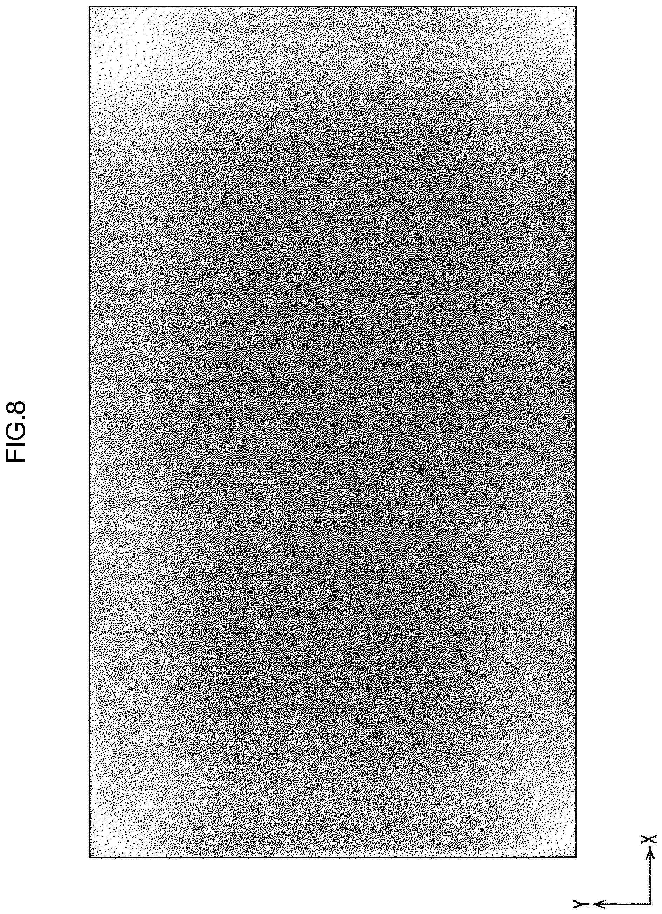

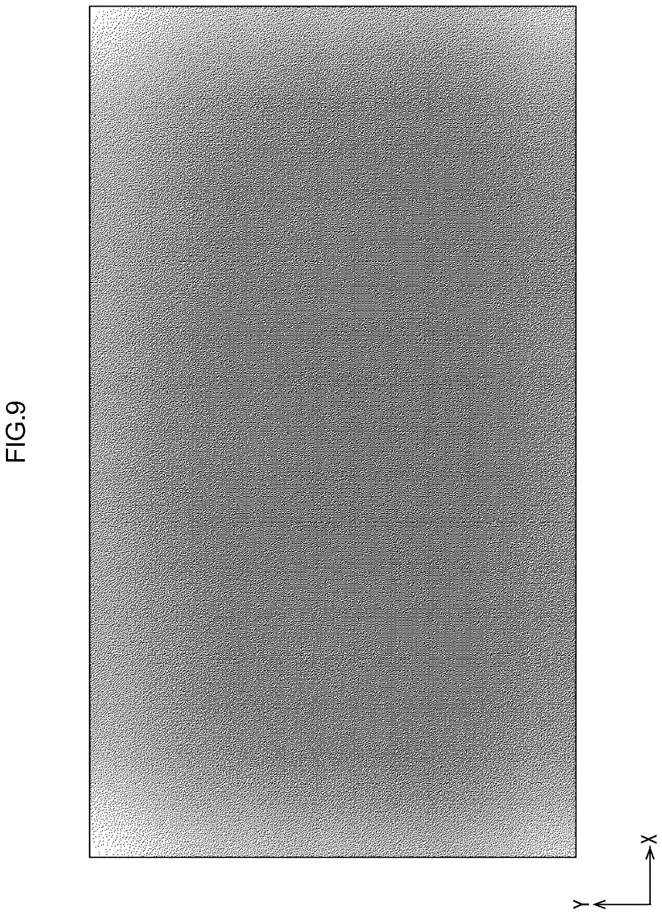

To verify the above actions and effects, the following comparative experiments 1 and 2 were conducted. First, comparative experiment 1 will be described. In comparative experiment 1, comparative example 1 and embodiment 1 were used. Comparative example 1 is a backlight unit that includes a reflection sheet with projected reflecting portions that are angled with a constant angle for an entire length and include holes for avoiding contact with connectors. Embodiment 1 is the backlight unit 12 that includes the reflection sheet 20 described in the previous paragraphs. Brightness distributions of light exiting from the backlight units were measured after LEDs in the backlight units were turned on. Results of comparative experiment 1 are illustrated in FIGS. 8 and 9. FIGS. 8 and 9 illustrate that density of dots varies according to levels of the brightness of the light from the backlight units. The higher the density of the dots is, the higher the brightness level is. The lower the density of the dots is, the lower the brightness level is.

The results of comparative experiment 1 will be described. As illustrated in FIG. 8, in the backlight unit of comparative example 1, the brightness levels in peripheral edge sections of the backlight unit that is viewed in plan is lower in comparison to the brightness level in the middle section. The brightness levels in short edge sections among the peripheral edge sections are especially low. The brightness levels at four corners are significantly low. The decreases in brightness levels in the short edge sections may occur because positions of projecting bases of short-side projected reflecting portions that are angles with a constant angle are located farther from the ends of the backlight unit on the short edge side. Therefore, light rays from the LEDs are less likely to reach the edge sections of the backlight unit on the short edge sides. This may be a major factor of the decreases in the brightness levels. Furthermore, the short-side projected reflecting portions include holes for passing the connectors. A leakage of light rays through the holes may be another major factor. The significant decrease in the brightness levels in the corners may result from remarkable insufficiency in light amount may be developed in the corners due to the above-described two factors.

As illustrated in FIG. 9, in the backlight unit 12 of embodiment 1, the brightness levels in the peripheral edge sections of the backlight unit 12 that is viewed in plan is lower than the brightness level in the middle section of the backlight unit 12. However, the brightness levels in the peripheral edge sections of the backlight unit 12 are higher than the brightness levels in the peripheral edge sections of the backlight unit of comparative example 1. A difference in brightness level between the peripheral edge sections and the middle section is relatively small. The brightness levels in the short edge sections among the peripheral edge sections are slightly lower than the brightness levels in the long edge sections. However, the brightness levels in the short edge sections are higher in comparison to comparative example 1. The angles of the base-side projected sections 23 of the projected reflecting portions 20bS are larger than the angles of the distal end-side projected sections 24. Therefore, the positions of the projecting bases of the projected reflecting portions 20bS are set closer to the ends of the backlight unit 12 on the short edge sides. A reason why the difference in brightness levels in the backlight unit 12 is smaller may be because more light rays from the LEDs 17 are directed to the edge section of the backlight unit 12 on the short edge sides and the dark spots due to the insufficient light amount are less likely to be produced in the areas of the projected reflecting portions 20bS on the projecting base sides. At the corners, the significant decrease in brightness level is less likely to occur unlike comparative example 1. Therefore, the brightness levels that are sufficient for practical use are achieved. This may be because the light rays from the LEDs 17 are efficiently directed to the corners of the backlight unit 12 according to the configuration of the projected reflecting portions 20bS.

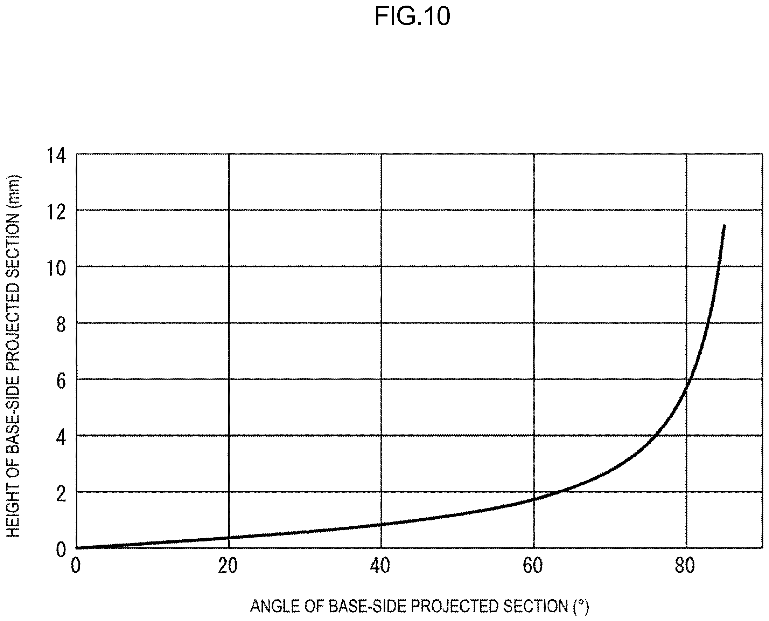

Next, comparative experiment 2 will be described. Comparative experiment 2 was conducted to observe how the height (the dimension in the Z-axis direction) of the base-side projected sections 23 of the projected reflecting portions 20bS of the reflection sheet 20 in embodiment 1 in comparative experiment 1 varied when the angle of the base-side projected sections 23 relative to the bottom-side reflecting portion 20a was altered. In comparative experiment 2, the angle of the base-side projected sections 23 of the projected reflecting portions 20bS was continuously altered from 0° to about 82.5° while the width (the dimension in the X-axis direction) of the base-side projected sections 23 was maintained fixed. The variations in the height of the base-side projected sections 23 according to the alteration of the angle were measured or calculated. Results are illustrated in FIG. 10. In FIG. 10, the horizontal axis represents the angle of the base-side projected sections 23 (in unit of degree (°)) and the vertical axis represents the height of the base-side projected sections 23 (in unit of millimeter (mm)).

The results of comparative experiment 2 will be described. According to FIG. 10, the height of the base-side projected sections 23 increases at a rate of change closely analogous to an exponential function as the angle increases. The height is smaller than 2 mm before the angle reaches 60°. When the angle exceeds 70°, the height reaches about 3 mm. When the angle reaches 80°, the height reaches 6 mm. The height of the connectors 22 in this embodiment is about 1.5 mm. To avoid the contact of the projected reflecting portions 20bS with the connectors 22, it is preferable that the height of the base-side projected sections 23 is at least 3 mm when an assembly tolerance is considered. If the angle of the base-side projected sections 23 of the projected reflecting portions 20bS is 70° or larger, the base-side projected sections 23 have the height that is sufficient to cover the connectors 22 while the LEDs 17 are disposed sufficiently closer to the ends of the backlight unit 12. According to the configuration, the reflection sheet 20 can be properly attached.

As described earlier, the backlight unit 12 (the lighting device) in this embodiment includes the LEDs 17 (the light sources), the chassis 14, the LED boards 18 (the light source boards), and the reflection sheet 20 (the reflection member). The chassis 14 includes the bottom plate 14a (the bottom) on the opposite side from the light emitting surface 17a side of the LEDs 17. The chassis 14 holds the LEDs 17 therein. The LED boards 18 on which the LEDs 17 are mounted are disposed along the bottom plate 14a. The reflection sheet 20 is configured to reflect the light rays from the LEDs 17. The reflection sheet 20 includes at least the bottom-side reflecting portion 20a and the projected reflecting portions 20b. The bottom-side reflecting portion 20a overlaps the LED boards 18 on the light emitting surface 17a side. The projected reflecting portions 20b project from the bottom-side reflecting portion 20a toward the light exiting side. The base-side projected sections 23 of the projected reflecting portions 20b are angled relative to the bottom-side reflecting portion 20a with the angle that is larger than the angle of the distal end-side projected sections 24 relative to the bottom-side reflecting portion 20a.

The light rays emitted by the LEDs 17 mounted on the LED boards 18 may be reflected by the bottom-side reflecting portion 20a and the projected reflecting portions 20b of the reflection sheet 20 and exit. The base-side projected sections 23 of the projected reflecting portions 20b are angled relative to the bottom-side reflecting portion 20a with the angler larger than the angle of the distal end-side projected sections relative to the bottom-side reflecting portion 20a. In comparison to the configuration in which the angle of the projected reflecting portions 20b relative to the bottom-side reflecting portion 20a is equal to the angle of the distal end-side projected sections 24 relative to the bottom-side reflecting portion 20a for the entire area, the positions of the projecting bases of the projected reflecting portions 20b can be set closer to the ends of the backlight unit 12. Therefore, the LEDs 17 can be disposed further closer to the ends of the backlight unit 12. More light rays from the LEDs 17 are directed to the edge sections of the backlight unit 12 and thus the difference in the amount of light exiting from the end sections of the backlight unit 12 and the amount of light exiting from the meddle section of the backlight unit 12 is reduced. Therefore, the uneven brightness can be properly reduced. If the angle of the projected reflecting portions 20b relative to the bottom-side reflecting portion 20a is constant for the entire area, some areas at the projecting bases of the projected reflecting portions 20b in which the amounts of reflected light rays are significantly small may be produced. Such areas may be recognized as dark spots. With the base-side projected sections 23 of the projected reflecting portions 20b angled relative to the bottom-side reflecting portion 20a with the angle that is larger than the angle of the distal end-side projected sections 24 relative to the bottom-side reflecting portion 20a, such dark spots are less likely to be produced. Therefore, the uneven brightness can be properly reduced. Because the uneven brightness can be reduced, this configuration is preferable for reducing the thickness of the backlight unit 12.

The connectors 22 (the power feeding portions) are disposed on the LED boards 18 for feeding power to the LEDs 17. The projected reflecting portions 20b are disposed to cover the connectors 22. According to the configuration, in comparison to the configuration in which the sections of the reflection sheet 20 which overlap the connectors 22 include the holes, the light reflectivity can be maintained uniform and thus the dark spots in which the amounts of exiting light are reduced are less likely to be produced. Furthermore, the light rays are efficiently reflected by the projected reflecting portions 20b. Therefore this configuration is preferable for reducing the uneven brightness. Furthermore, the high light use efficiency can be achieved and thus it is preferable for reducing the power consumption.

The angle of the base-side projected sections 23 of the projected reflecting portions 20b relative to the bottom-side reflecting portion 20a is set in the range from 70° to 95°. With the base-side projected sections 23 of the projected reflecting portions 20b angled relative to the bottom-side reflecting portion 20a with the angle equal to 70° or larger, in comparison to the configuration in which the angle is smaller than 70°, the LEDs 17 can be disposed sufficiently closer to the ends of the backlight unit 12. Furthermore, the base-side projected sections 23 of the projected reflecting portions 20b have the height that is sufficient to cover the connectors 22. With the base-side projected sections 23 of the projected reflecting portions 20b angled relative to the bottom-side reflecting portion 20a with the angle equal to 95° or smaller, in comparison to the configuration in which the angle is larger than 95°, the projected reflecting portions 20b can properly deliver the light reflecting performance.

The angle of the base-side projected sections 23 of the projected reflecting portion 20b relative to the bottom-side reflecting portion 20a is set in the range from 85° to 95°. According to the configuration, in comparison to the configuration in which the angle id smaller than 85°, the LEDs 17 can be disposed further closer to the ends of the backlight unit 12. Therefore, this configuration is further preferable for reducing the uneven brightness. Furthermore, the base-side projected sections 23 of the projected reflecting portions 20b have the height that is sufficient to cover the connectors 22. With the angle of the base-side projected sections 23 of the projected reflecting portions 20b relative to the bottom-side reflecting portion 20a equal to 95° or smaller, in comparison to the configuration in which the angle is larger than 95°, the projected reflecting portions 20b can properly deliver the light reflecting performance.

The chassis 14 includes the side plates 14c (the side portions) which project from the bottom plate 14a toward the light exiting side. The side plates 14c are angled relative to the bottom plate 14a. According to the configuration, the figure of the backlight unit 12 appears to be thin, that is, the backlight unit 12 has a good appearance.

The angle of the side plates relative to the bottom plate 14a is larger than the angle of the distal end-side projected sections 24 of the projected reflecting portions 20b relative to the bottom-side reflecting portion 20a. According to the configuration, the side plates 14c are less likely to contact the projected reflecting portions 20b. Furthermore, spaces are provided between the side plates 14c and the projected reflecting portions 20b.

The creepage distance of the distal end-side projected sections 24 of the projected reflecting portions 20b is larger than the creepage distance of the base-side projected sections 23 of the projected reflecting portions 20b. According to the configuration, the light rays can be efficiently directed to the edge sections of the backlight unit 12 by the distal end-side projected sections 24 that are angled relative to the bottom-side reflecting portion 20a with the relatively small angle. Therefore, this configuration is preferable for reducing the uneven brightness.

The boundaries between the boundaries between the base-side projected sections 23 and the distal end-side projected sections 24 of the projected reflecting portions 20b are at the same height for the entire area. According to the configuration, the shape of the projected reflecting portion 20b can be simplified and thus the reflection sheet 20 can be easily produced or designed.

The liquid crystal display device 10 according to this embodiment includes the backlight unit 12 that is described above and the liquid crystal panel 11 (the display panel) which is configured to display images using the light applied by the backlight unit 12. Because the uneven brightness of the light emitted by the backlight unit 12 is reduced, the liquid crystal display device 10 that has such a configuration can perform image display with high display quality.

The television device 10TV according to this embodiment includes the liquid crystal display device 10 that is described above. Because the liquid crystal display device 10 is provided with high display quality, the television device 10TV that has such a configuration can perform television image display with high display quality.

### <Second Embodiment>

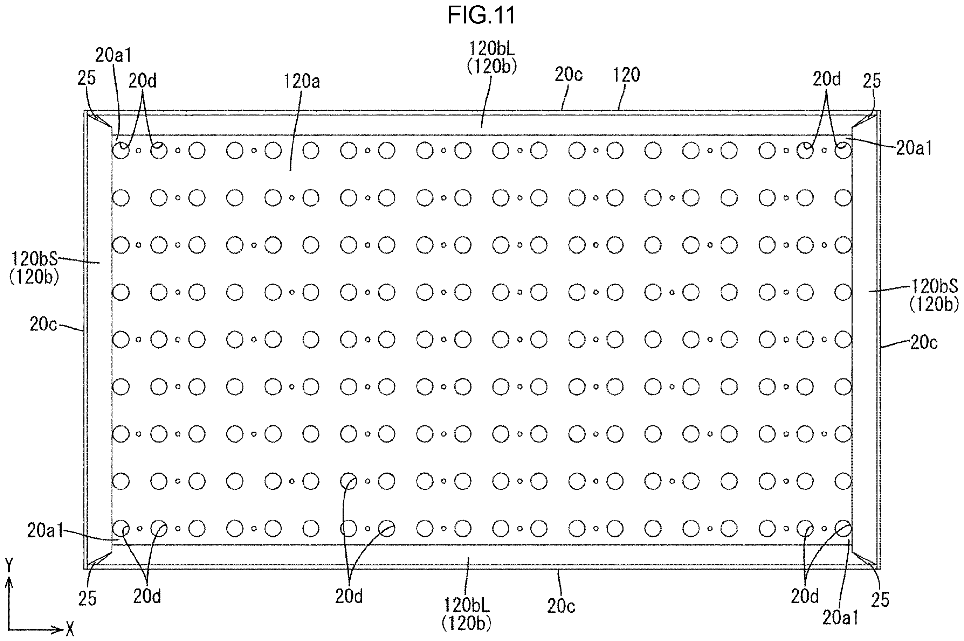

A second embodiment of the present invention will be described with reference to FIGS. 11 to 15. The second embodiment includes projected reflecting portions 120b having a shape different from that of the first embodiment. Configurations, functions, and effects similar to those of the first embodiment will not be described.

As illustrated in FIGS. 11 to 13, a reflection sheet 120 in this embodiment includes long-side projected reflecting portions 120bL (first projected reflecting portions) and short-side projected reflecting portions 120bS (second projected reflecting portions) which project from edges of a bottom-side reflecting portion 120a. The edges of the bottom-side reflecting portion define four corners 120a1. The short-side projected reflecting portions 120bS include distal end-side projected sections 124. The distal end-side projected sections 124 include overlapping protrusions 25 that protrude toward the adjacent long-side projected reflecting portions 120bL to overlap the long-side projected reflecting portions 120bL. According to the configuration, gaps between the long-side projected reflecting portions 120bL and the short-side projected reflecting portions 120bS can be closed. Therefore, leakages of light through the gaps are less likely to occur and the projected reflecting portions 120bS and 120bL have high shape stability. Therefore, this configuration is preferable for reducing uneven brightness. In FIGS. 11 to 13, the diffuser lenses 19 and the fixing members 21 in the first embodiment are omitted.

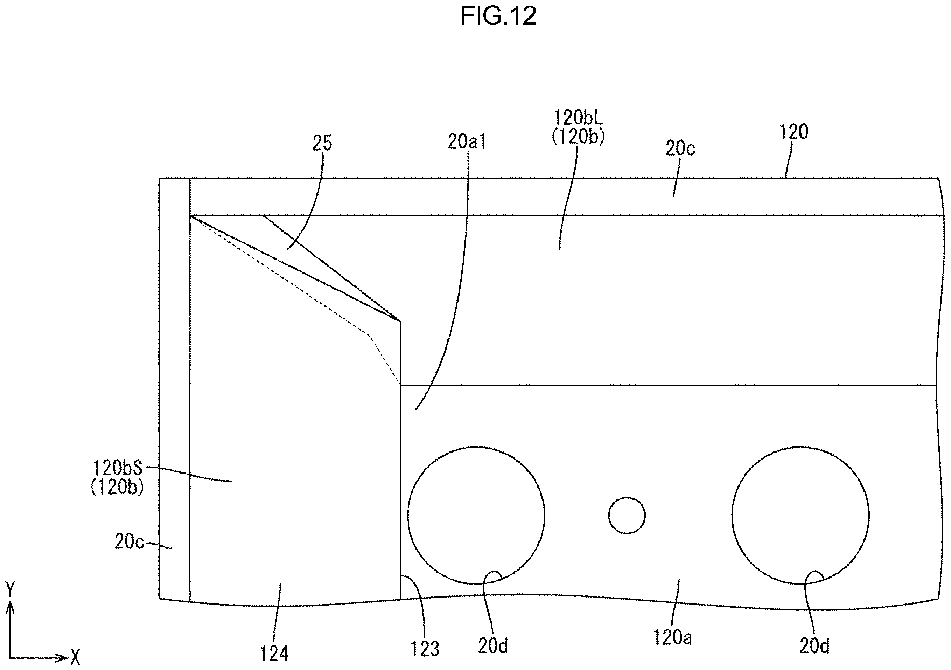

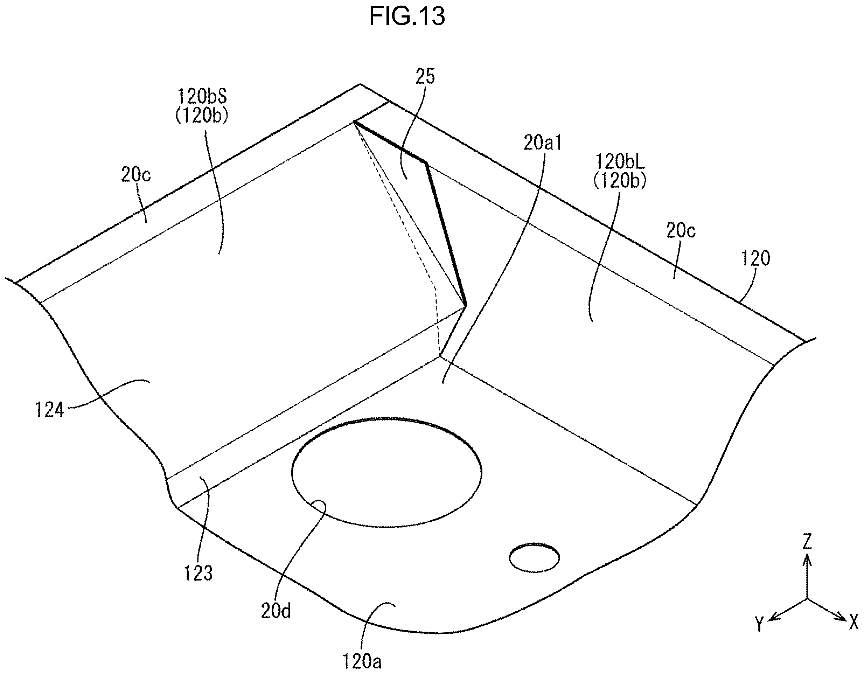

Specifically, as illustrated in FIGS. 12 and 13, two overlapping protrusions 25 are provided at ends of the distal end-side projected section 124 of each short-side projected reflecting portion 120bS with respect to the Y-axis direction and adjacent to the long-side reflecting portions 120bL. The overlapping protrusions 25 overlap the long-side projected reflecting portions 120bL adjacent thereto from the front side. The overlapping protrusions 25 are provided for an entire length of the ends of the distal end-side projected sections with respect to the Y-axis direction. A dimension of each overlapping protrusion 25 in a direction in which the overlapping protrusion 25 protrudes toward the adjacent long-side projected reflecting portion 120bL continuously and gradually increases from a base of the distal end-side projected section 124 (on a base-side projected section 123 side) toward a distal end of the distal end-side projected section 124. Each overlapping protrusion 25 has a triangular plan-view shape. Each long-side projected reflecting portion 120bL over which the overlapping protrusion 25 is disposed is angled relative to the bottom-side reflecting portion 120a with an angle that is constant for an entire length of the bottom-side reflecting portion 120a as described in the first embodiment section.

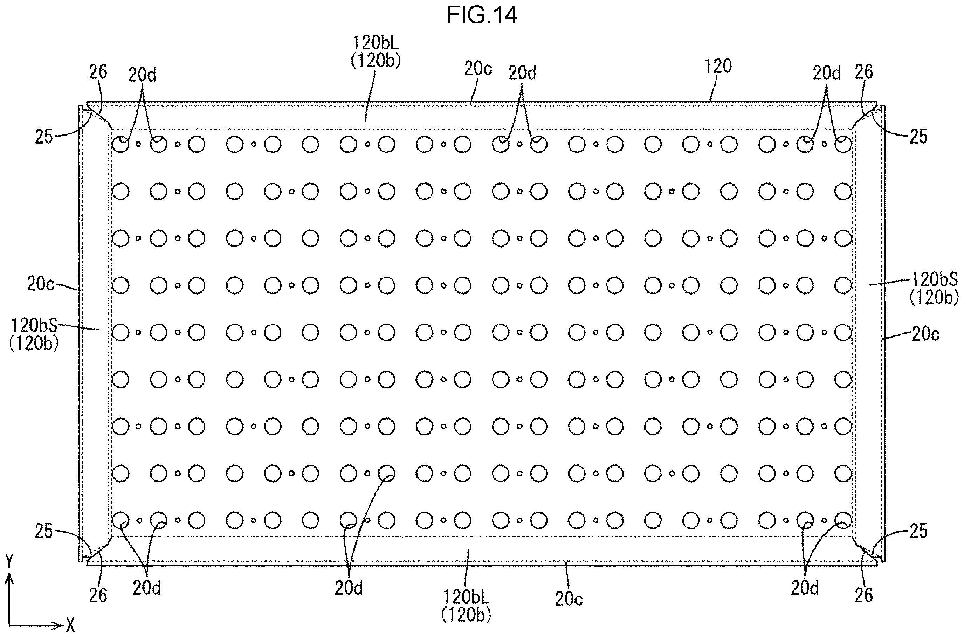

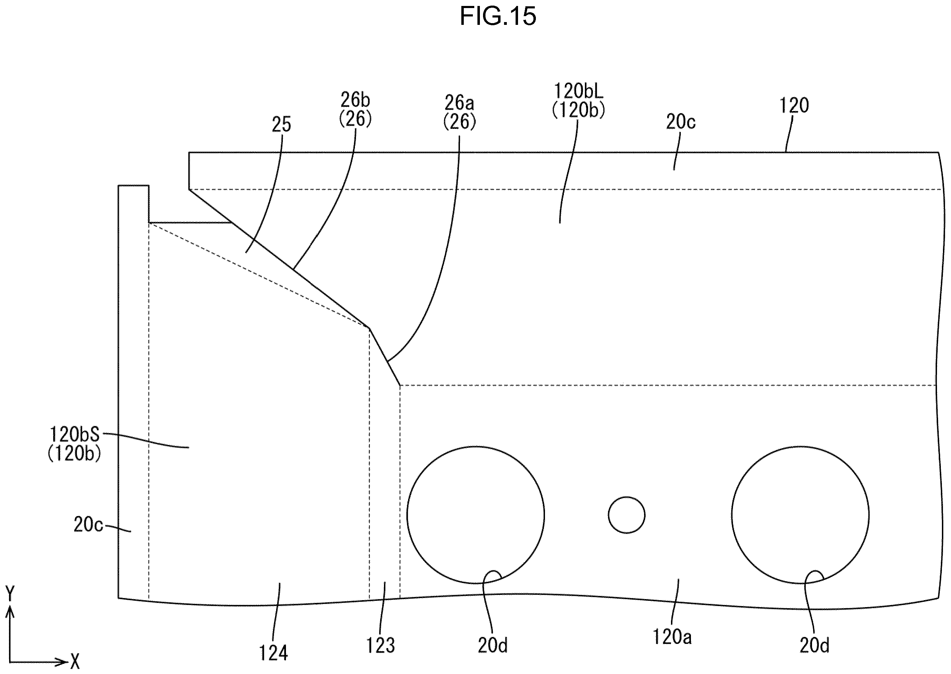

The reflection sheet 120 that is in a developed state before folded into the three-dimensional shape will be described. As illustrated in FIGS. 14 and 15, the reflection sheet 120 that is in the developed state includes two-dimensionally formed perforations 26 at boundaries between the long-side projected reflecting portions 120bL and the short-side projected reflecting portions 120bS. The perforations 26 bend at points. The perforations 26 bend at boundaries between base-side projected sections 123 and the distal end-side projected sections 124 of the short-side projected reflecting portions 120bS. The perforations 26 include first sections 26a on the base-side projected section 123 sides and second sections 26b on the distal end-side projected section 124 sides. An angle of each first section 26a with respect to the X-axis direction is larger than that of the corresponding second section 26b of the perforations 26. The second sections 26b of the perforations 26 on the distal end-side projected section 124 sides define the overlapping protrusions 25 that continue into the distal end-side projected sections 124. In FIGS. 14 and 15, positions at which the reflection sheet 120 that is in the developed state is folded (folding lines) are indicated with broken lines and cut lines in the reflection sheet 120 that is in the developed state are indicated with solid lines.

As described above, this embodiment includes the bottom-side reflecting portion 120a that includes the corners 120a1 and at least two projected reflecting portions 120b that project from the edges of the bottom-side reflecting portion 120a which define the corners 120a1. The first projected reflecting portion 120bL of the at least two projected reflecting portions 120b is angled relative to the bottom-side reflecting portion 120a with the constant angle. The second projected reflecting portion 120bS of the at least two projected reflecting portions 120b includes the base-side projected section 123 and the distal end-side projected section 124. The base-side projected section 123 is angled relative to the bottom-side reflecting portion 120a with the angle that is larger than the angle of the distal end-side projected section 124 relative to the bottom-side reflecting portion 120a. The distal end-side projected section 124 includes the overlapping protrusion 25 that protrudes toward the first projected reflecting portion 120bL to overlap the first projected reflecting portion 120bL. The distal end-side projected section of the second projected reflecting portion 120bS of the projected reflecting portions 120b includes the base-side projected section 123 that is angled relative to the bottom-side reflecting portion 120a with the angle that is larger than the angle of the distal end-side projected section 124 relative to the bottom-side reflecting portion 120a. The second projected reflecting portion 120bS of the projected reflecting portions 120b includes the overlapping protrusion 25. The overlapping protrusion 25 protrudes toward the first projected reflecting portion 120bL to overlap the first projected reflecting portion 120bL. Therefore, the gap between the first projected reflecting portion 120bL and the second projected reflecting portion 120bS is closed with the overlapping protrusion 25. According to the configuration, a leakage of light through the gap is less likely to occur. Furthermore, the projected reflecting portions 120b have high shape stability. Therefore, this configuration is preferable for reducing the uneven brightness.

### <Third Embodiment>

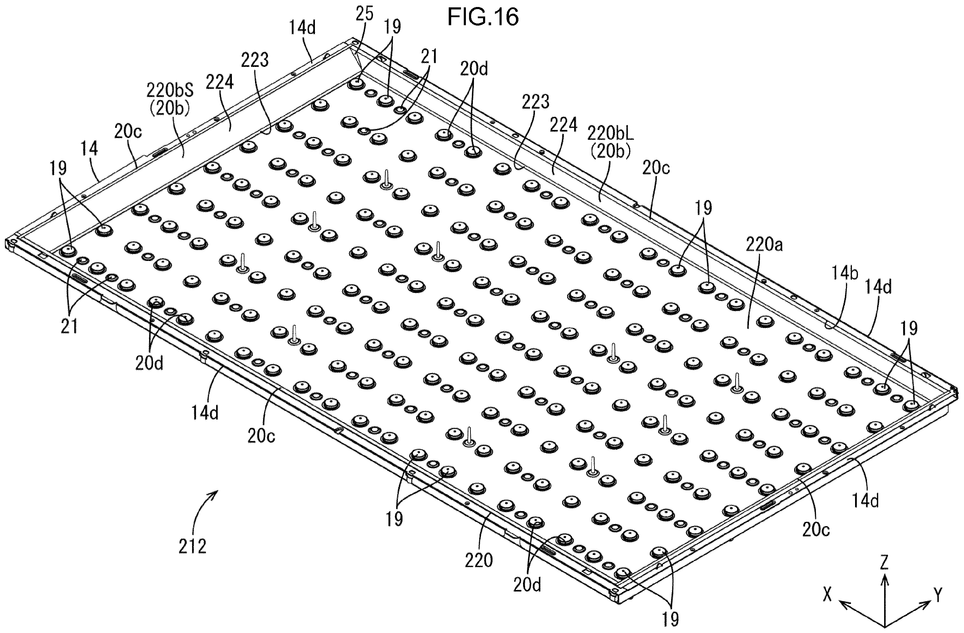

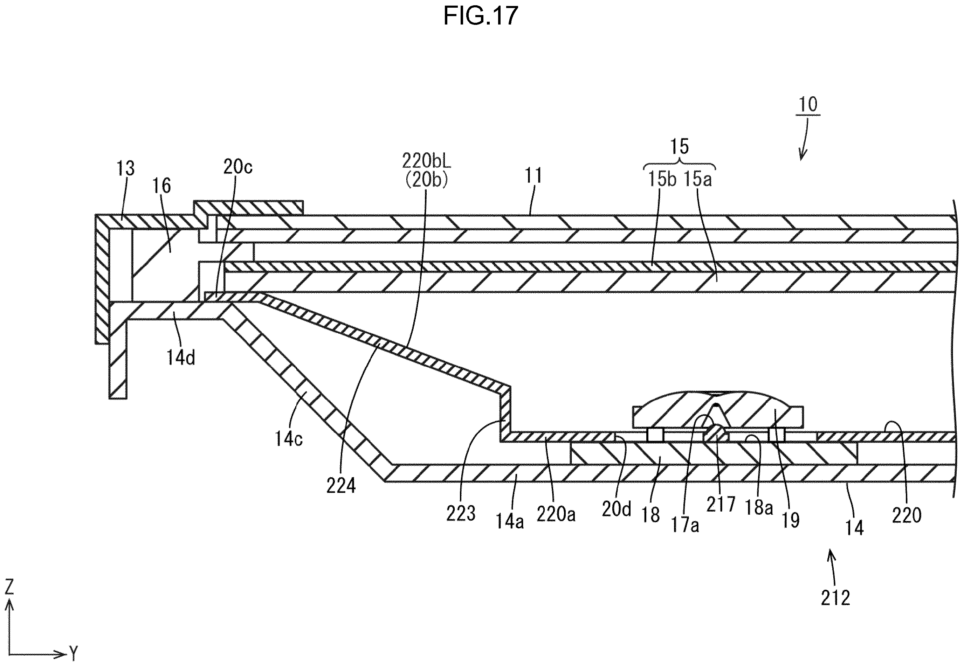

A third embodiment of the present invention will be described with reference to FIGS. 16 and 17. The third embodiment includes long-side projected reflecting portions 220bL having a shape different from that of the second embodiment. Configurations, functions, and effects similar to those of the second embodiment will not be described.

As illustrated in FIGS. 16 and 17, a reflection sheet 220 in this embodiment includes the long-side projected reflecting portions 220bL. The long-side projected reflecting portions 220bL include base-side projected sections 223 and distal end-side projected sections 224. The base-side projected sections 223 are closer to a bottom-side reflecting portion 220a and the distal end-side projected portions 224 are farther from the bottom-side reflecting portion 220a. The base-side projected sections 223 are angled relative to the bottom-side reflecting portion 220a with an angle that is larger than an angle of the distal end-side projected sections 224 relative to the bottom-side reflecting portion 220a. Two projected reflecting portions 220bS and two projected reflecting portions 220bL are disposed in a loop to surround the bottom-side reflecting portion 220a. The base-side projected sections 223 of those are angled relative to the bottom-side reflecting portion 220a with the angle that is larger than the angle of the distal end-side projected sections 224 relative to the bottom-side reflecting portion 220a. A cross-sectional shape of the long-side projected reflecting portions 220bL that do not overlap the connectors (see FIG. 3), which are not illustrated in the drawings regarding this embodiment, is the same as a cross-sectional shape of the short-side projected reflecting portions 220bS that overlap the connectors 22 when viewed in plan. According to the configuration, positions of projecting bases of the long-side projected reflecting portions 220bL can be set closer to ends of a backlight unit 212 with respect to the Y-axis direction. Therefore, LEDs 217 at ends with respect to the Y-axis direction can be disposed closer to the ends of the backlight unit 212. Within the plane of the bottom-side reflecting portion 220a, the LEDs 217 at the outermost among the LEDs 217 arranged in a matrix can be disposed closer to the respective ends of the backlight unit 212. Therefore, dark spots are less likely to be produced for an entire perimeter of peripheral sections of the backlight unit 212. This configuration is preferable for reducing uneven brightness. Furthermore, dark spots, that is, areas of the base-side projected portions in which amounts of exiting light are reduced are less likely to be produced not only in the short-side projected reflecting portions 220bS but also in the long-side projected reflecting portions 220bL. Therefore, this configuration is further preferable for reducing the uneven brightness.

As described above, in this embodiment, the projected reflecting portions 220b are disposed in the loop to surround the bottom-side reflecting portion 220a and the angle of the base-side projected sections 223 of the respective projected reflecting portions 220b relative to the bottom-side reflecting portion 220a is larger than the angle of the distal end-side projected sections 224 of the respective projected reflecting portions 220b relative to the bottom-side reflecting portion 220a. Because the projected reflecting portions 220b that are disposed in the loop to surround the bottom-side reflecting portion 220a and the angle of the base-side projected sections 223 of the respective projected reflecting portions 220b relative to the bottom-side reflecting portion 220a is larger than the angle of the distal end-side projected sections 224 of the respective projected reflecting portions 220b relative to the bottom-side reflecting portion 220a, the positions of the projecting bases of the projected reflecting portions 220b can be set closer to the ends of the backlight unit 212 and thus the LEDs 217 can be disposed further closer to the ends of the backlight unit 212. This configuration is preferable for reducing the uneven brightness. Furthermore, the dark spots are less likely to be produced on the base sides of the projected reflecting portions 220b. Therefore, this configuration is further preferable for reducing the uneven brightness.

### <Fourth Embodiment>

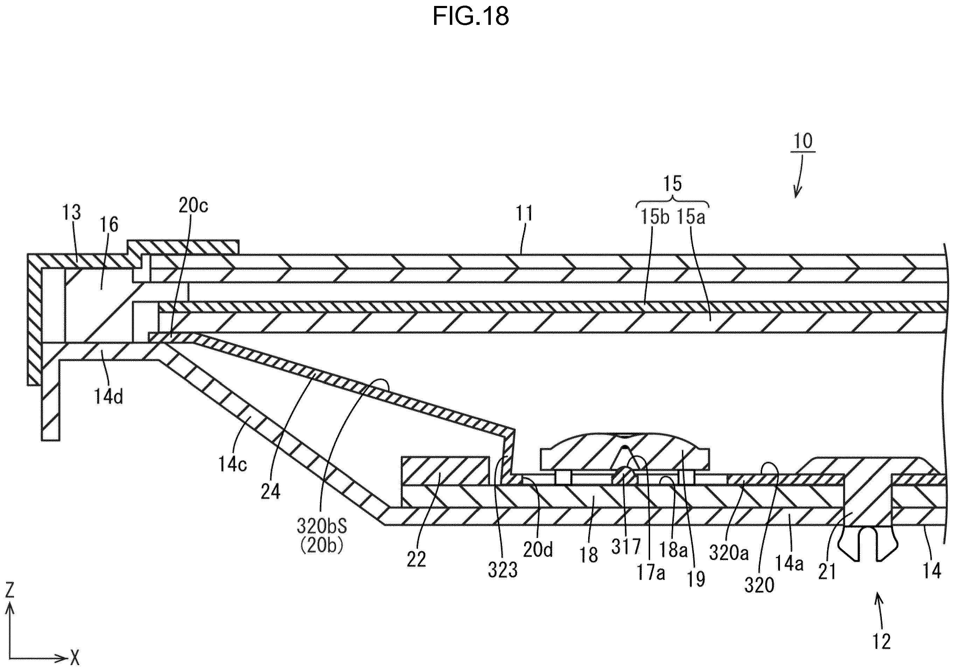

A fourth embodiment of the present invention will be described with reference to FIG. 18. The fourth embodiment includes base-side projected sections 323 that are angled with an angle that is different from that of the first embodiment. Configurations, functions, and effects similar to those of the first embodiment will not be described.

As illustrated in FIG. 18, short-side projected reflecting portions 320bS that are included in a reflection sheet 320 in this embodiment include the base-side projected sections 323 that are angled relative to a bottom-side reflecting portion 320a with an obtuse angle, specifically, about 95°. In comparison to a configuration in which the angle is larger than 95°, projected reflecting portions 320b can properly deliver light reflecting performance. In this embodiment, the angle of the base-side projected sections 323 is defined as about 95°. However, angle θ of the base-side projected sections 323 can be altered, where appropriate, within a range of obtuse angle "90° < θ <95°."

### <Fifth Embodiment>

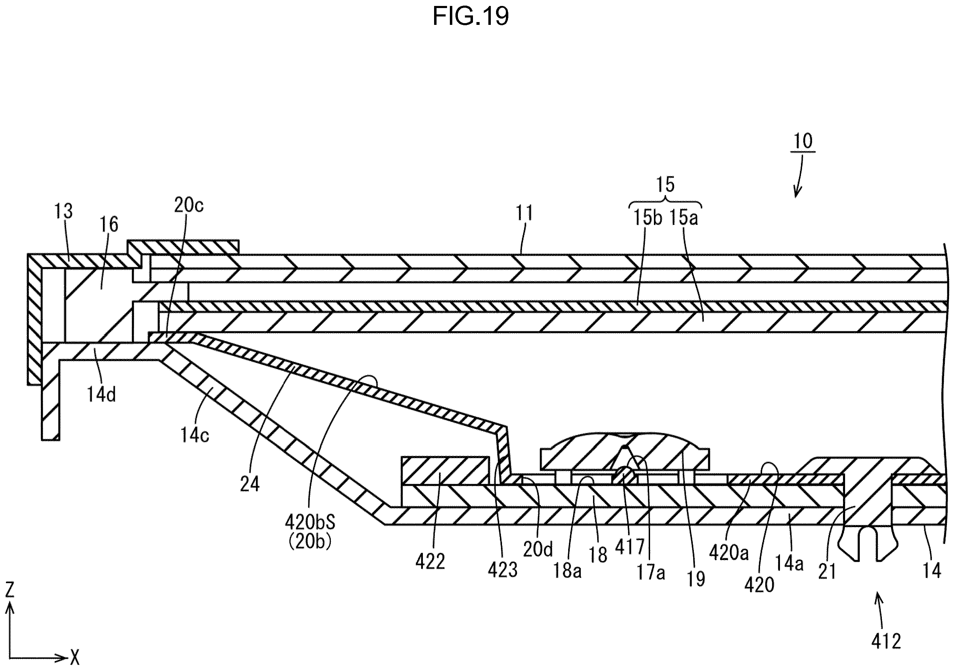

A fifth embodiment of the present invention will be described with reference to FIG. 19. The fifth embodiment includes base-side projected sections 423 that are angled with an angle different from that of the first embodiment. Configurations, functions, and effects similar to those of the first embodiment will not be described.

As illustrated in FIG. 19, short-side projected reflecting portions 420bS that are included in a reflection sheet 420 in this embodiment include the base-side projected sections 423 that are angled relative to a bottom-side reflecting portion 420a with an acute angle, specifically, about 85°. In comparison to a configuration in which the angle is smaller than 85°, LEDs 417 can be disposed further closer to ends of a backlight unit 412. Therefore, this configuration is more preferable for reducing the uneven brightness. Furthermore, the base-side projected sections 423 of the projected reflecting portions 420bS have the height that is sufficient to cover connectors 422. Therefore, the projected reflecting portions 420bS are less likely to contact the connectors 422. In this embodiment, the angle of the base-side projected sections 423 is about 85°. However, angle θ of the base-side projected sections 423 can be altered, where appropriate, within a range of acute angle of "85° < θ <90°."

### <Sixth Embodiment>

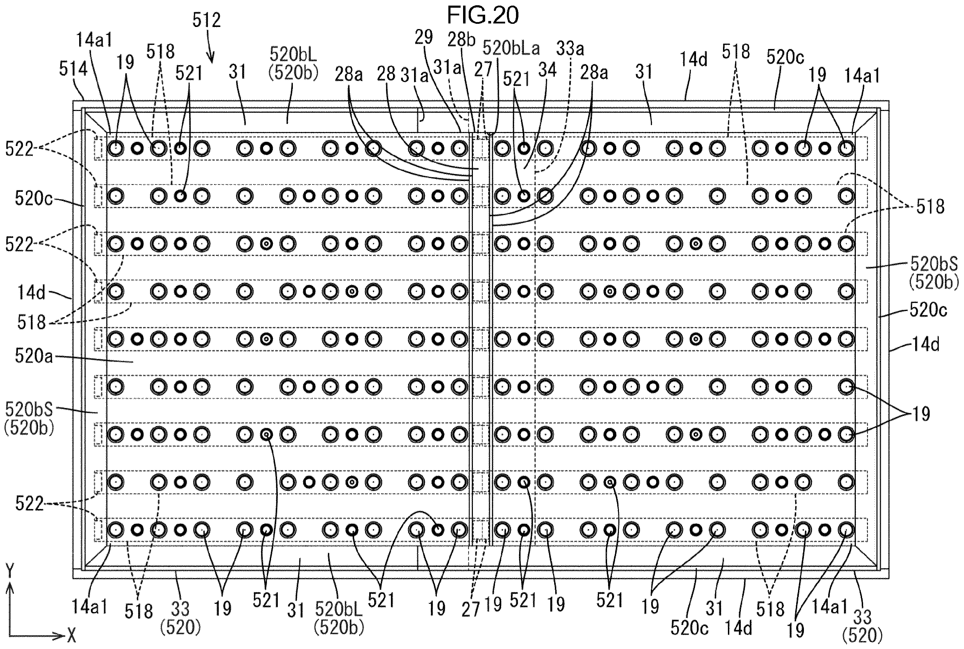

A sixth embodiment of the present invention will be described with reference to FIGS. 20 to 27. The sixth embodiment includes LED boards 518 having a configuration that is different from that of the first embodiment and a reflection sheet 520 having a distinctive configuration that is different from that of the first embodiment. Configurations, functions, and effects similar to those of the first embodiment will not be described.

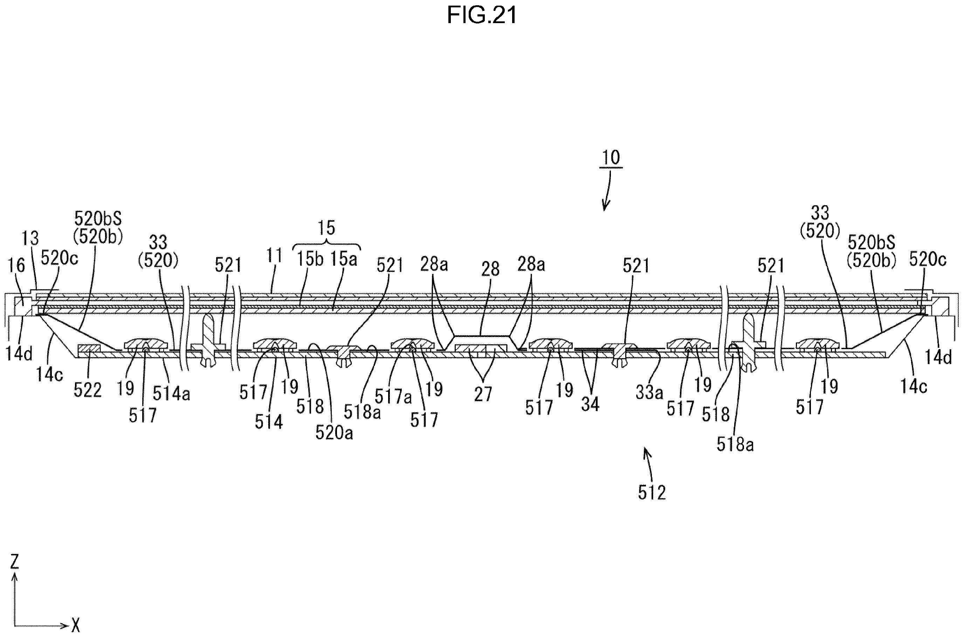

As illustrated in FIGS. 20 and 21, in this embodiment, inter-board connectors 27 are disposed on the LED boards 518. The inter-board connectors 27 are configured to electrically connect the LED boards 518 that are adjacent to each other in the X-axis direction. The inter-board connectors 27 are mounted to front plate surfaces of ends of the LED boards 518 that are arranged in the X-axis direction in the middle of a backlight unit 512 with respect to the X-axis direction, that is, mounting surfaces 518a of the LED boards 518. The LED boards 518 are single-surface mounting type boards similar to those in the first embodiment. The inter-board connectors 27 mounted on the LED boards 518 arranged in lines (linearly) along the Y-axis direction in about the middle of the backlight unit 512 with respect to the X-axis direction. The inter-board connectors 27 include male type connectors and female type connectors to be fitted to each other. The male type inter-board connectors 27 are disposed on the LED boards 518 on one side among the LED boards 518 with respect to the X-axis direction and the female type inter-board connectors 27 are disposed on the LED boards 518 on the other side with respect to the X-axis direction. When the male type inter-board connectors 27 are fitted to the female type inter-board connectors 27, the LED boards 518 that are adjacent to each other with respect to the X-axis direction are electrically connected. Namely, the inter-board connectors 27 are board-to-board type connectors. Connectors 522 that are wire-to-board type connectors described in the first embodiment section are disposed on the LED boards 518 on one side (on the left in FIG. 20) with respect to the X-axis direction. The LED boards 518 are electrically connected to an LED driver circuit board via the connectors 522 and wiring members, which are not illustrated. Traces are formed on the LED boards 518 on the other side with respect to the X-axis direction (on the right in FIG. 20) on which the connectors 522 are not disposed. The traces are turned around at opposite ends of the LED boards 518 from the ends on which the inter-board connectors 27 are disposed. The reflection sheet 520 in this embodiment is different from the first embodiment in that the angle of short-side projected reflecting portions 520bS relative to a bottom-side reflecting portion 520a is substantially constant for the entire length similarly to the long-side projected reflecting portions 520bL.

In a conventional backlight unit that includes holes in a bottom-side reflecting portion of a reflection sheet for passing inter-board connectors that are disposed at positions to overlap the bottom-side reflecting portion, a local reduction in efficiency in light reflection may occur due to the inter-board connectors that are exposed through the holes form in the bottom-side reflecting portion. As a result, dark spots may be produced. To form the bottom-side reflecting portion to protrude along outlines of the inter-board connectors, an expensive processing such as vacuum forming may be required for the reflection sheet. A production cost of the reflection sheet may increase.

As illustrated in FIGS. 20 and 21, the reflection sheet 520 in this embodiment includes an elevated section 28 that is a section of the bottom-side reflecting portion 520a elevated toward the front side (an opposite side from the LED board 518 side) . The elevated section 28 is disposed to overlap the inter-board connectors 27 when viewed in plan. The elevated section 28 bends along folding lines parallel to the Y-axis direction that corresponds with a direction in which the inter-board connectors 27 are arranged and collectively covers the inter-board connectors 27 that are arranged along the Y-axis direction. The elevated section 28 has a trapezoidal cross-sectional shape. Two folding lines 28a are at positions of projecting bases from which the elevated section 28 project from the bottom-side reflecting portion 520a and two folding lines 28a are at distal ends. The folding lines 28a linearly extend in the Y-axis direction. The elevated section 28 is formed through bending processing. It is preferable to form perforations, which are not illustrated, along the folding lines 28a to provide easiness in forming of the elevated section 28. In comparison to a configuration in which the bottom-side reflecting portion includes the holes for passing the inter-board connectors, the local reduction in efficiency in light reflection is less likely to occur in the backlight unit 512 because the inter-board connectors 27 are less likely to be exposed to the outside of the bottom-side reflecting portion 520a. According to this configuration, the uneven brightness is less likely to occur. Furthermore, the elevated section 28 bends along the folding lines 28a that are parallel to the direction in which the inter-board connectors 27 are arranged and collectively covers the inter-board connectors 27. The elevated section 28 can be easily formed through the bending processing on the bottom-side reflecting portion 520a. In comparison to an elevated section that is formed using a vacuum forming method, which is a known technology, the configuration of this embodiment is preferable for reducing the production cost of the reflection sheet 520. In comparison to a configuration including elevated sections provided for the inter-board connectors 27, respectively, a shape of the bottom-side reflecting portion 520a does not become complicated, that is, the shape id simple. Therefore, the reflection sheet 520 can be easily produced. Furthermore, areas of the bottom-side reflecting portion 520a which may be shaded by the elevated section 28 are less likely to be produced and thus the uneven brightness is less likely to occur. In the configuration including the elevated sections that are provided for the inter-board connectors 27, respectively, positioning of the elevated sections relative to the respective inter-board connectors 27 is required in attachment of the reflection sheet 520. In comparison to such a configuration, the reflection sheet 520 can be more easily attached.

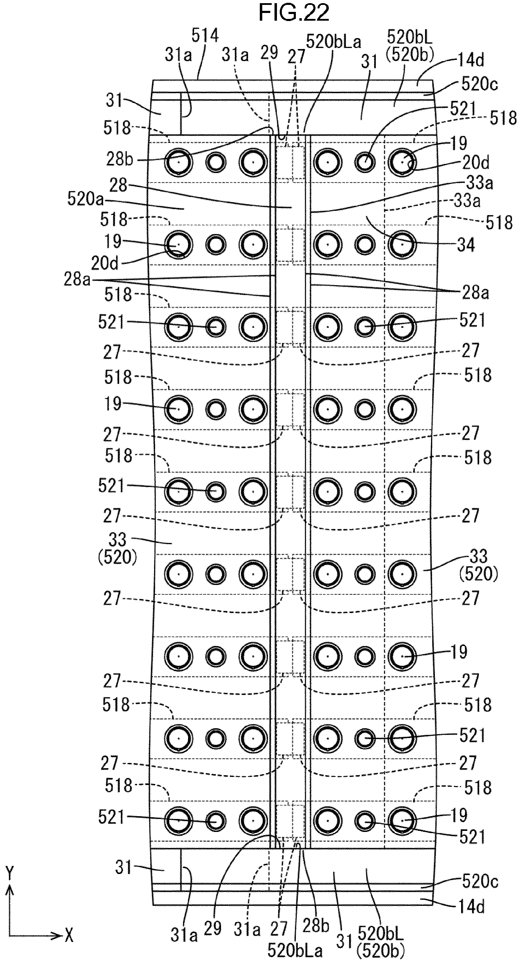

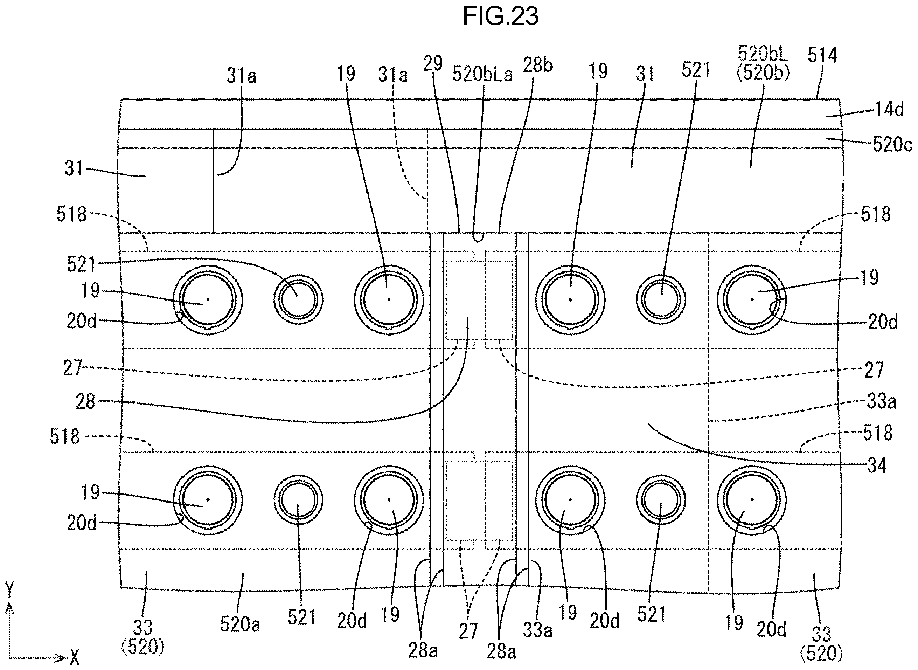

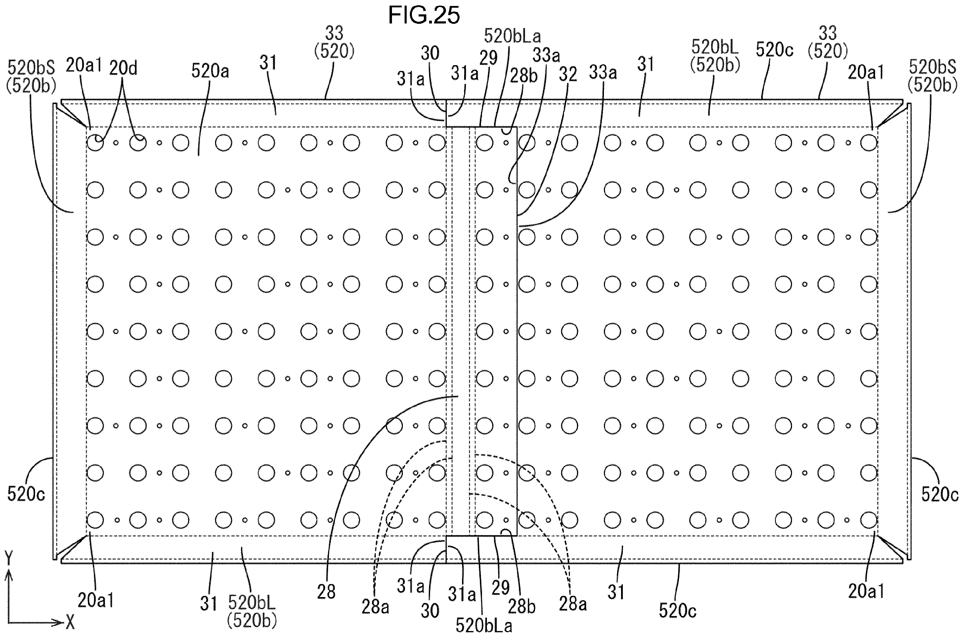

Specifically, as illustrated in FIGS. 22 and 23, the elevated section 28 is disposed around the middle of the bottom-side reflecting portion 520a in the long direction thereof (the X-axis direction). The elevated section 28 extends along the short direction of the bottom-side reflecting portion 520a (the Y-axis direction) . The elevated section 28 has a band shape when viewed in plan. Ends of the elevated section 28 in the extending direction thereof (the Y-axis direction) are adjacent to the long-side projected reflecting portions 520bL among four projected reflecting portions 520b. As illustrated in FIG. 25, the reflection sheet 520 includes cut lines 29 at boundaries between the elevated section 28 of the bottom-side reflecting portion 520a and the long-side projected reflecting portions 520bL. With the cut lines 29, the long-side projected reflecting portions 520bL are separated from the elevated section 28. The long-side projected reflecting portions 520bL include projecting-side first separating edges 520bLa (first separating edges) along the cut lines 29 and the elevated section 28 includes bottom-side first separating edges 28b (third separating edges) along the cut lines 29. When the reflection sheet 520 that is in the developed state before shaped, the projecting-side first separating edges 520bLa and the bottom-side first separating edges 28b are parallel to and adjacent to each other. The elevated section 28 of the bottom-side reflecting portion 520a may be formed in a three dimensional shape by punching the reflection sheet 520 that is in the developed state out of a base material and performing bending processing. Because the long-side projected reflecting portions 520bL are separated from the elevated section 28, the projected reflecting portions 520bL are less likely to deform during the formation of the elevated section 28. The elevated section 28 can be easily formed through the bending processing. In comparison to the formation of the elevated section using the vacuum forming method, this configuration is more preferable for reducing the production cost of the reflection sheet 520.

As illustrated in FIG. 25, the long-side projected reflecting portions 520bL include second cut lines 30 that continue into the cut lines 29, respectively. With the second cut lines 30, the long-side projected reflecting portions 520bL are divided to include a pair of projected reflecting sections 31. The pair of projected reflecting sections 31 that are divided by the second cut lines 30 include projecting-side second separating edges 31a (second separating edges) along the second cut lines 30 to continue into the projecting-side first separating edges 520bLa, respectively. When the reflection sheet 520 is in the developed state before shaped, the projecting-side second separating edges 31a are parallel to and adjacent to each other. As illustrated in FIGS. 22 and 23, the projected reflecting sections 31 include overlapping sections including the projecting-side second separating edges 31a and overlapping each other when the reflection sheet 520 is in the tree-dimensional shape. In a configuration in which the projected reflecting portions are not divided, a process for folding the projected reflecting portions during the formation of the elevated section 28 may be required. According to the configuration of this embodiment in which the projected reflecting sections 31 are provided such that the projecting-side second separating edges 31a continue into the projecting-side first separating edges 520bLa, it is only necessary to place the sections of the projected reflecting sections 31 including the projecting-side second separating edges 31a on top of each other. This configuration is preferable for maintaining shape stability of the projected reflecting portions 520bL. The projected reflecting portions 520bL can stably deliver the light reflecting performance. The second cut lines 30 extend to divide not only the projected reflecting portions 520bL but also extended portions 520c, each of which is divided into two.

As illustrated in FIG. 25, each projected reflecting portion 520bL includes the second cut line 30 that continues into one of ends of the cut line 29 (on the left in FIG. 25). The cut line 29 and each second cut line 30 form an L shape when viewed in plan. A first projected reflecting section 31 (on the right in FIG. 25) of the pair of projected reflecting sections 31 includes the projecting-side first separating edges 520bLa and the projecting-side second separating edge 31a. A second projected reflecting section 31 (on the left in FIG. 25) of the pair of projected reflecting sections 31 includes the projecting-side second separating edge 31a but not the projecting-side first separating edge 520bLa. Namely, the first projected reflecting sections 31 of the pair of projected reflecting sections 31 is separated from the bottom-side reflecting portion 520a (the elevated section 28) but the second projected reflecting section 31 of the pair of projected reflecting sections 31 is not separated from the bottom-side reflecting portion 520a. The second projected reflecting section 31 is connected with the bottom-side reflecting portion 520a for the entire area. Therefore, unexpected deformation is less likely to occur in the second projected reflecting section 31.

As illustrated in FIG. 25, the bottom-side reflecting portion 520a of the reflection sheet 520 that is in the developed state includes a third cut line 32 that continues into the cut lines 29. With the third cut line 32, the reflection sheet 520 is divided to include a pair of reflection sheet sections 33. The reflection sheet sections 33 that are provided through the division with the third cut line 32 include bottom-side second separating edges 33a (fourth separating edges) along the third cut line 32 to continue into the bottom-side first separating edges 28b. The second separating edges 33a are parallel to and adjacent to each other when the reflection sheet 520 is in the developed state before shaped. As illustrated in FIGS. 22 and 23, sections of the reflection sheet sections 33 including the bottom-side second separating edges 33a are placed on top of each other when the reflection sheet 520 is in the three-dimensional shape. In the configuration including the reflection sheet that is not divided, the reflection sheet sections 33 can be separately handled in the production according to the configuration described above. The reflection sheet sections 33 that are in the developed state may be separately formed into the three-dimensional shape and then assembled together. Through such a process, the reflection sheet 520 can be formed into the three dimensional shape. This configuration provides easiness in assembly work.

As illustrated in FIG. 25, the reflection sheet 520 includes the third cut line that continues into the second ends of the cut lines 29 (on the right side in FIG. 25, the opposite side from the second cut lines 30). The cut lines 29 and the third cut line 32 form a channel shape when viewed in plan. The first reflection sheet section 33 (on the left in FIG. 25) of the pair of reflection sheet sections 33 includes the bottom-side first separating edges 28b and the bottom-side second separating edge 33a. The second reflection sheet section 33 (on the right in FIG. 25) of the pair of reflection sheet sections 33 includes only the bottom-side second separating edge 33a but not the bottom-side first separating edge 28b. Namely, the elevated section 28 is exclusively included in the first reflection sheet section 33 and not in the second reflection sheet section 33. In the first reflection sheet section 33 of the pair reflection sheet sections 33, the bottom-side reflecting portion 520a (the elevated section 28) is separated from the projected reflecting portions 520bL. In the second reflection sheet section 33 of the pair of reflection sheet sections 33, the bottom-side reflecting portion 520a is not separated from the projected reflecting portions 520bL and continues into the projected reflecting portions 520bL for the entire area. According to the configuration, an unexpected deformation is less likely to occur in the second reflection sheet section 33. As illustrated in FIGS. 22 and 23, when the reflection sheet 520 is in the shaped state, the section of the bottom-side reflecting portion 520a including the bottom-side section separating edge 33a of the first reflection sheet section 33 of the pair of reflection sheet sections 33 overlaps the section of the bottom-side reflecting portion 520a including the bottom-side section separating edge 33a of the second reflection sheet section 33 from the rear side (an LED board 518 side, a bottom plate 514a side) to be not disposed to the front side. The second reflection sheet section 33 is disposed such that the bottom-side second separating edge 33a of the bottom-side reflecting portion 520a substantially matches the folding line 28a of the elevated section 28. According to the configuration, the bottom-side second separating edge 33a is less likely to be recognized as unevenness during operation of the backlight unit 512.

As illustrated in FIGS. 22 to 24, fixing members 521 are attached to the reflection sheet 520 to penetrate an overlapping section 34 of the bottom-side reflecting portion 520a in which the reflection sheet sections 33 overlap each other. The fixing members 521 are common parts for the overlapping section 34 of the reflection sheet sections 33. Namely, the fixing members 521 dispersed within the plane of the bottom plate 514a of a chassis 514 include individually fixing type fixing members and collectively fixing type fixing members. The individually fixing type fixing members are attached to the reflection sheet 520 to penetrate non-overlapping sections in which the bottom-side reflecting portion 520a of the reflection sheet sections 33 do not overlap each other and individually fix the reflection sheet sections 33. The collectively fixing type fixing members are attached to the reflection sheet 520 to penetrate the overlapping section 34 of the bottom-side reflecting portion 520a and collectively fix the reflection sheet sections 33. With the collectively fixing type fixing members are included in the fixing members 521, the number of the fixing members 521 can be reduced and the number of steps of attaching the fixing members 521 can be reduced. This configuration has an advantage in productivity.

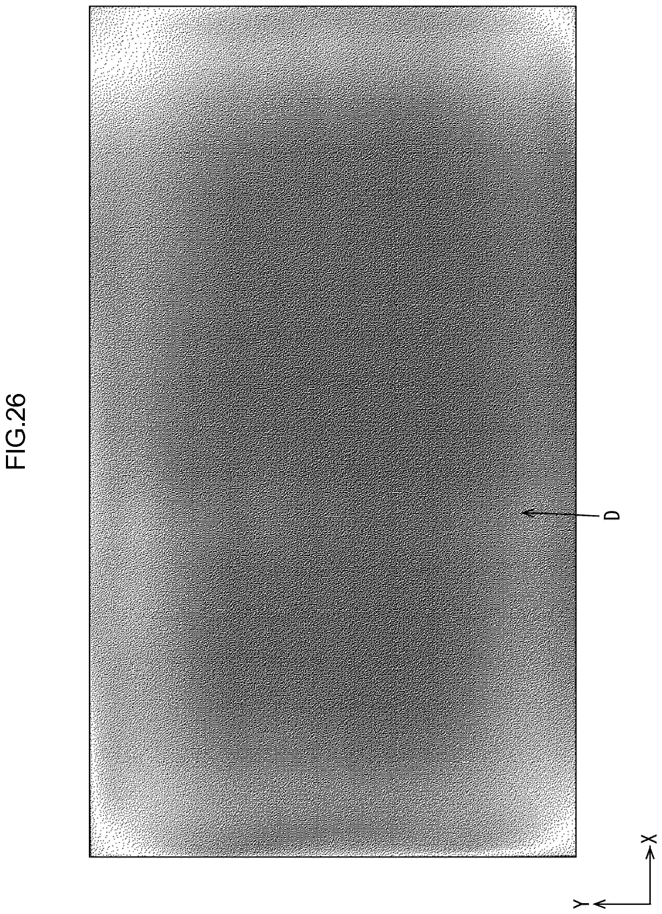

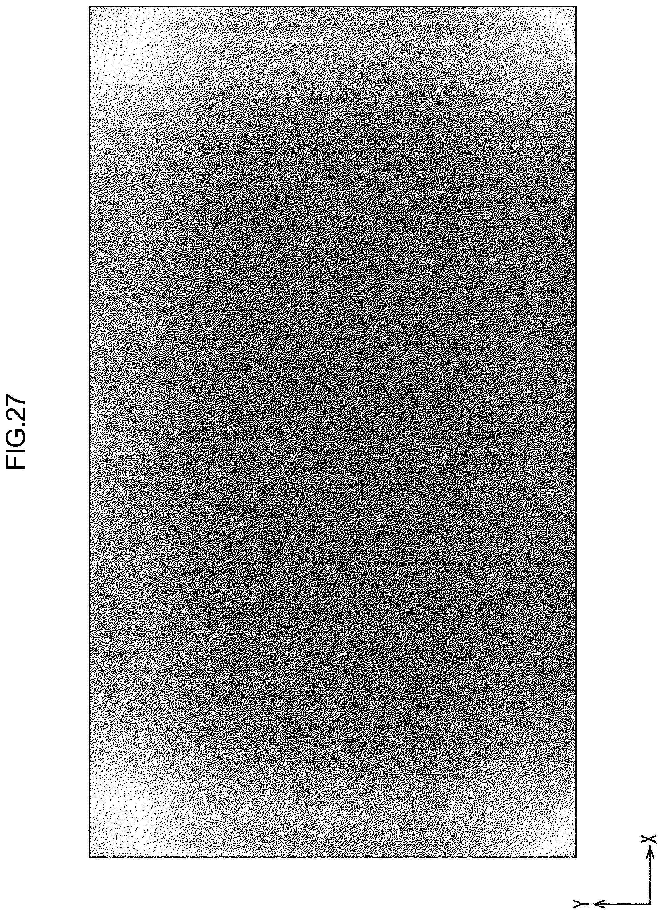

To verify the above actions and effects achieved by the reflection sheet 520 in this embodiment, the following comparative experiment 3 was conducted. In comparative experiment 3, comparative example 2 and embodiment 2 were used. Comparative example 2 is a backlight unit that includes a reflection sheet including a bottom-side reflecting portion with holes for passing inter-board connectors. Embodiment 2 is the backlight unit 512 including the reflection sheet 520 described in the previous paragraphs. Brightness distributions of light exiting from the backlight units of comparative example 2 and embodiment 2 were measured after LEDs in the backlight units were turned on. Results of comparative experiment 3 are illustrated in FIGS. 26 and 27. FIGS. 26 and 27 illustrate that density of dots varies according to levels of the brightness of the light from the backlight units. The higher the density of the dots is, the higher the brightness level is. The lower the density of the dots is, the lower the brightness level is.

The results of comparative experiment 3 will be described. As illustrated in FIG. 26, in the backlight unit of comparative example 2, the brightness levels in peripheral edge sections when the backlight unit is viewed in plan are lower than the brightness level in the middle section. The brightness level in an area of the middle section around the middle of the middle section with respect to the X-axis direction is lower resulting in a band-shaped dark area D that extends in the Y-axis direction. A reason why such a dark area D is created may be because the inter-board connectors are exposed to an internal space of the backlight unit through the holes formed in the bottom-side reflecting portion of the reflection sheet and light rays are absorbed by the exposed inter-board connectors that have light reflectivity lower than light reflectivity of the bottom-side reflecting portion. As illustrated in FIG. 27, in the backlight unit 512 of embodiment 2, the brightness levels in the peripheral edge sections when the backlight unit 512 is viewed in plan are lower than the brightness level in the middle section. However, the brightness level in the middle section is substantially uniform. Therefore, the dark area D is not created unlike the backlight unit of comparative example 2. This is because the elevated section 28 is provided in the section of the bottom-side reflecting portion 520a of the reflection sheet 520 overlapping the inter-board connectors 27 to cover the inter-board connectors 27. The inter-board connectors 27 are covered with the elevated section 28 such that the inter-board connectors 27 are not exposed to an internal space of the backlight unit 512 and thus the light rays are not absorbed by the inter-board connectors 27.

As described above, the backlight unit 512 (the lighting device) according to this embodiment includes LEDs 517 (light sources), multiple LED boards 518 (the light source boards), the chassis 514, multiple inter-board connectors 27 (the power feeding portions), the reflection sheet 520 (the reflection member), and the elevated section 28. The LEDs 517 are mounted on the LED boards 518. The chassis 514 includes the bottom plate 514a (the bottom) disposed on an opposite side from a light emitting surface 517a side of the LEDs 517 relative to the LED boards 518. The LED boards 518 are arranged along the bottom plate 514a. The inter-board connectors 27 are disposed on the LED boards 18. The inter-board connectors 27 are arranged in lines along the bottom plate 514a. The reflection sheet 520 includes the bottom-side reflecting portion 520a that is disposed to cover the LED boards 518. The reflection sheet 520 reflects the light rays from the LEDs 517. The elevated section 28 is formed through elevating of a section of the bottom-side reflecting portion 520a to the opposite side from the LED boards 518. The elevated section 28 bends along the folding lines 28a that are parallel to the direction in which the inter-board connectors 27 are arranged and collectively covers the inter-board connectors 27.

The light rays that are emitted by the LEDs 517 on the LED boards 518 through the light emitting surfaces 517a may be reflected by the bottom-side reflecting portion 520a of the reflection sheet 520 and exit. Power is supplied to the LED boards 518 via the inter-board connectors 27 that are arranged in lines along the bottom plate 514a. The bottom-side reflecting portion 520a includes the elevated section 28 that is formed by elevating a section of the bottom-side reflecting portion 520a toward the opposite side from the LED boards 518. The inter-board connectors 27 are covered with the elevated section 28. In comparison to the configuration including the holes that are formed in the bottom-side reflecting portion for passing the inter-board connectors 27, a local reduction in efficiency in light reflectively is less likely to occur and thus the uneven brightness is less likely to occur. Furthermore, the elevated section 28 bends along the folding lines 28a that are parallel to the direction in which the inter-board connectors 27 are arranged and collectively covers the inter-board connectors 27. The elevated section 28 can be easily formed through bending processing performed on the bottom-side reflecting portion 520a. In comparison to the formation of the elevated section 28 using the vacuum forming method, the bending processing is preferable for reducing the production cost of the reflection sheet 520. Furthermore, in comparison to the elevated sections that are provided for the inter-board connectors 27, respectively, the shape of the bottom-side reflecting portion 520a does not become complicated, that is, the shape id simple. Therefore, the reflection sheet 520 can be easily produced. Furthermore, areas of the bottom-side reflecting portion 520a shaded by the elevated section 28 are less likely to be produced and thus the uneven brightness is less likely to occur. In the configuration including the elevated sections provided for the inter-board connectors 27, respectively, positioning of the elevated sections relative to the respective inter-board connectors 27 is required in attachment of the reflection sheet 520. In comparison to such a configuration, the reflection sheet 520 can be more easily attached.

The reflection sheet 520 includes the projected reflecting portions 520b that project from the bottom-side reflecting portion 520a toward the light exiting side. The projected reflecting portions 520b are separated from the elevated section 28 of the bottom-side reflecting portion 520a. The elevated section 28, which is the section of the bottom-side reflecting portion 520a, may be formed through the bending processing performed on the reflection sheet 520. In this case, the projected reflecting portions 520b are separated from the elevated section 28 of the bottom-side reflecting portion 520a. Because the projected reflecting portions 520b are separated from the elevated section 28 of the bottom-side reflecting portion 520a, the projected reflecting portions 520b are less likely to deform during the formation of the elevated section 28. The elevated section 28 can be easily formed through the bending processing. In comparison to the formation of the elevated section using the vacuum forming method, this configuration is more preferable for reducing the production cost of the reflection sheet 520.

The projected reflecting portions 520b include the projected reflecting sections 31 that provided through the division of the projected reflecting portions 520b to include the projecting-side second separating edges 31a (the second separating edges) . The projecting-side second separating edges 31a continues into the projecting-side first separating edges 520bLa (the first separating edges) which are separated from the elevated section 28. The sections of the projected reflecting sections 31 including the projecting-side second separating edges 31a overlap each other. If the projected reflecting portion is not divided and does not include divided sections, a process for folding the projected reflection portions may be required during the formation of the elevated section 28. In this embodiment, the projected reflecting sections 31 are provided such that the projecting-side second separating edges 31a continue into the projecting-side first separating edges 520bLa. It is only necessary to place the sections of the projected reflecting sections 31 including the projecting-side second separating edges 31a on top of each other. This configuration is preferable for stability maintaining the shape of the projected reflecting portions 520b. The projected reflecting portions 520b can stably deliver the light reflecting performance.

The projected reflecting sections 31 are configured such that the first projected reflecting sections 31 include the projecting-side first separating edges 520bLa and the projecting-side second separating edges 31a and the second projected reflecting sections 31 include the projecting-side second separating edges 31a. The first projected reflecting sections 31 among the projected reflecting sections 31 are separated from the elevated section 28 of the bottom-side reflecting portion 520a. The second projected reflecting sections 31 among the projected reflecting sections 31 are not separated from the bottom-side reflecting portion 520a. Therefore, unexpected deformation is less likely to occur in the second projected reflecting sections 31.

The reflection sheet 520 includes the reflection sheet sections 33 (the reflection member sections) . The reflection sheet sections 33 are provided through the division of the reflection sheet 520 to include the bottom-side second separating edges 33a (the fourth separating edges) which continue into the bottom-side first separating edges 28b (the third separating edges) of the bottom-side reflecting portion 520a which are separated from the projected reflecting portions 520b. The sections of the reflection sheet sections 33 including the bottom-side second separating edges 33a overlap each other. According to the configuration, the reflection sheet sections 33 can be individually handled in the production. This provides easiness in assembly work.

The reflection sheet sections 33 are configured such that the first reflection sheet section 33 includes the bottom-side first separating edges 28b and the bottom-side second separating edge 33a and the second reflecting sheet section 33 includes the bottom-side second separating edge 33a. According to the configuration, the bottom-side reflecting portion 520a in the first reflection sheet section 33 of the reflection sheet sections 33 is separated from the projected reflecting portions 520b and the bottom-side reflecting portion 520a in the second reflection sheet section 33 is not separated from the projected reflecting portions 520b. According to the configuration, unexpected deformation is less likely to occur in the bottom-side reflecting portion 520a that is not separated from the projected reflecting portions 520b in the second reflection sheet section 33 and continues into the projected reflecting portions 520b.

Furthermore, the fixing members 521 are provided for fixing the reflection sheet 520 to the chassis 514. The fixing members 521 penetrate the bottom-side reflecting portion 520a and the bottom plate 514a. Some of the fixing members 521 penetrate the overlapping portion 34 in which the reflection sheet sections 33 overlap each other. According to the configuration, in comparison to the configuration in which the reflection sheet sections are fixed with separate fixing members 521, the number of the fixing members 521 can be reduced and the number of steps of attaching the fixing members 521 can be reduced. Therefore, high productivity can be achieved.

### <Seventh Embodiment>

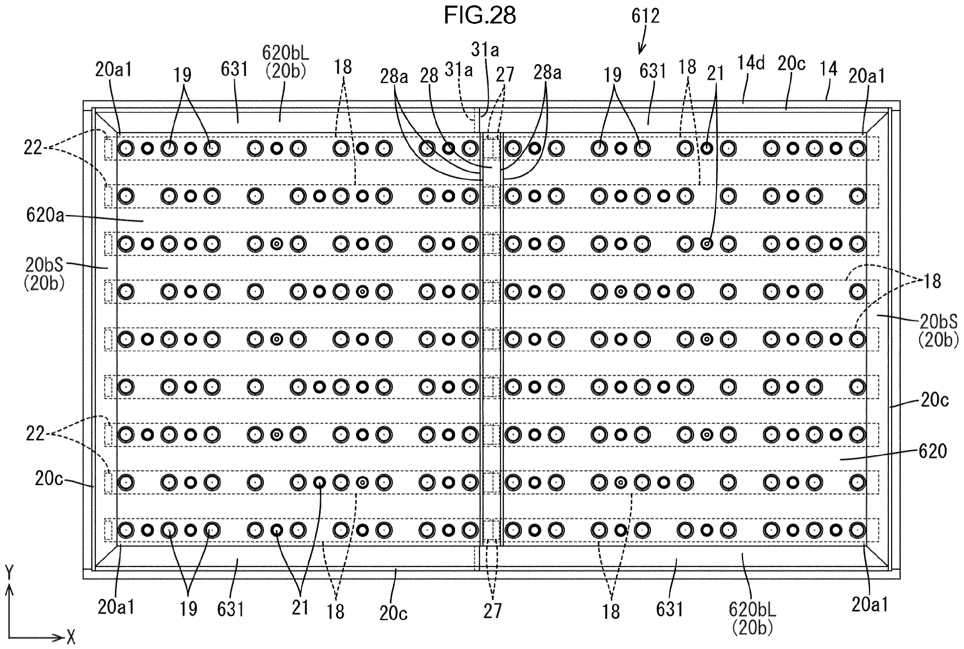

A seventh embodiment of the present invention will be described with reference to FIGS. 28 to 30. The seventh embodiment includes a reflection sheet 620 having a configuration different from that of the sixth embodiment. Configurations, functions, and effects similar to those of the sixth embodiment will not be described.

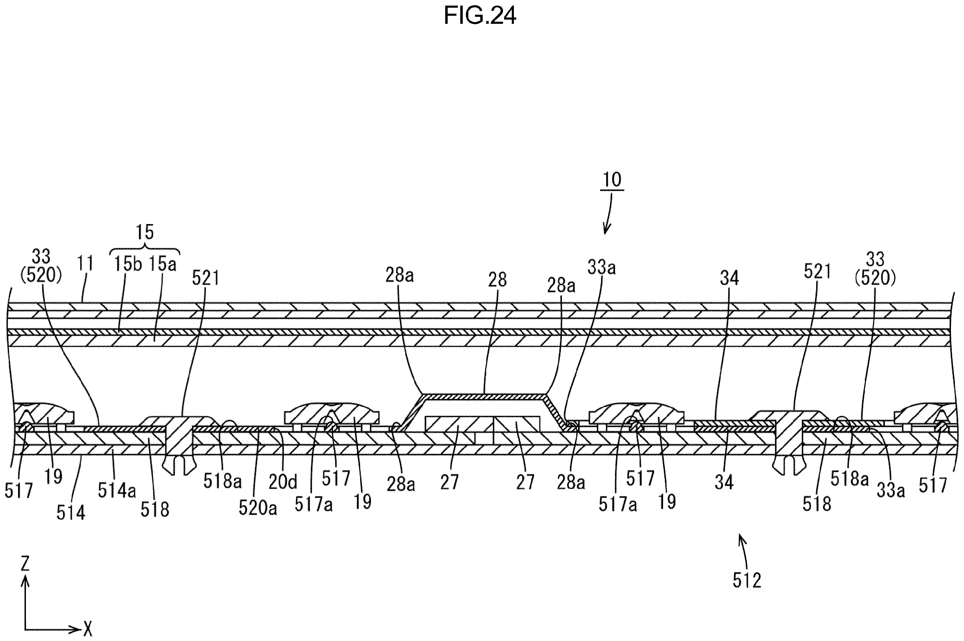

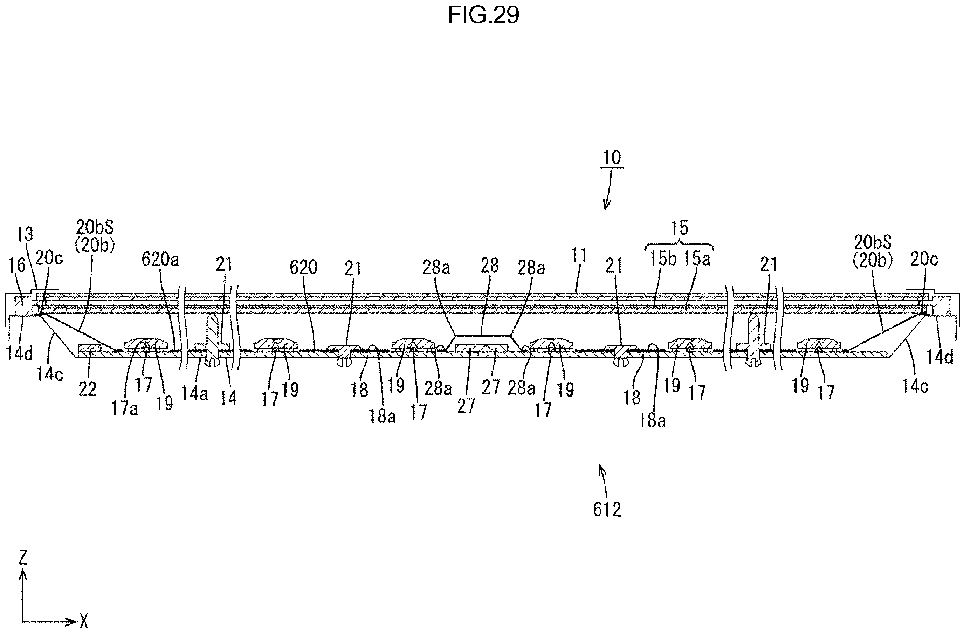

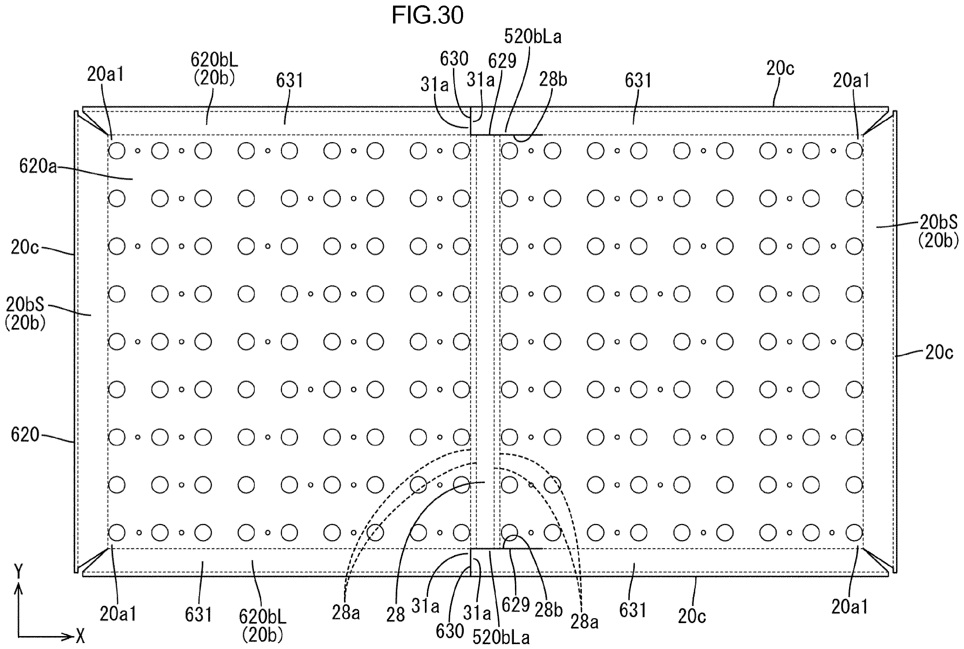

As illustrated in FIGS. 28 and 29, the reflection sheet 620 in this embodiment includes a pair of long-side projected reflecting portions 620bL and a bottom-side reflecting portion 620a. The long-side projected reflecting portions 620bL are divided into sections but the bottom-side reflecting portion 620a is not divided. As illustrated in FIG. 30, the reflection sheet 620 includes cut lines 629 at boundaries between an elevated section 628 of the bottom-side reflecting portion 620a and the long-side projected reflecting portions 620bL. Furthermore, the long-side projected reflecting portions 620bL and long-side extended portions 620c include second cut lines 630. These features are similar to the sixth embodiment. However, this embodiment is different from the sixth embodiment in that the bottom-side reflecting portion 620a does not include the third cut line 32 (see FIG. 25) which is provided in the sixth embodiment. Because the reflection sheet 620 is not configured as two parts, the reflection sheet 620 can be handled as a single part. According to the configuration, the number of parts of a backlight unit 612 can be reduced and thus this configuration has an advantage in parts management. In this configuration, each long-side projected reflecting portion 620bL is divided into two projected reflecting sections 631. Similar to the sixth embodiment, the long-side projected reflecting portions 620bL include overlapping sections in which the projected reflecting sections 631 overlap each other. However, the overlapping section 34 in the sixth embodiment (see FIGS. 23 and 24) is not included in this embodiment because the bottom-side reflecting portion 620a is not divided.

As described above, at least either the bottom-side projected reflecting portion 620a or the projected reflecting portions 620b of the reflection sheet 620 are not divided in this embodiment. According to the configuration, in comparison to a configuration including a reflection sheet that has a divisional configuration, the number of parts of the backlight unit 612 can be reduced and this configuration has an advantage in parts management.

### <Eighth Embodiment>

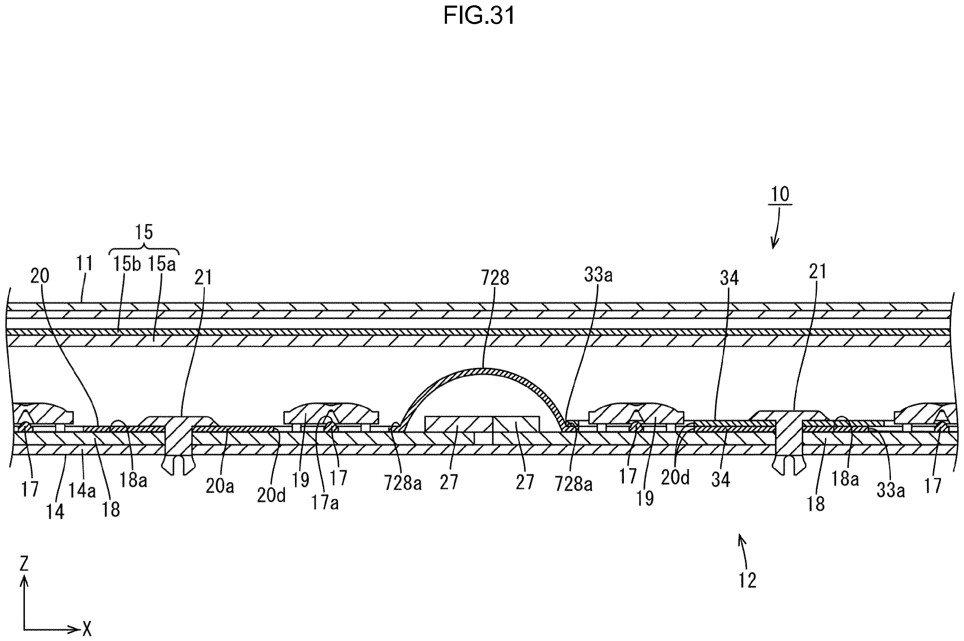

An eighth embodiment of the present invention will be described with reference to FIG. 31. The eighth embodiment includes an elevated section 728 having a shape different from that of the sixth embodiment described earlier. Configurations, functions, and effects similar to those of the sixth embodiment will not be described.

As illustrated in FIG. 31, the elevated section 728 in this embodiment has a cross section that is substantially semicircular (a dome shape). According to the configuration, the elevated section 728 requires folding lines 728a at two positions, which are positions of projecting bases. Namely, the number of the folding liens 728a is smaller than the number of the folding lines in the sixth embodiment. Therefore, unevenness that may result from the folding lines 728a can be reduced.

### <Ninth Embodiment>

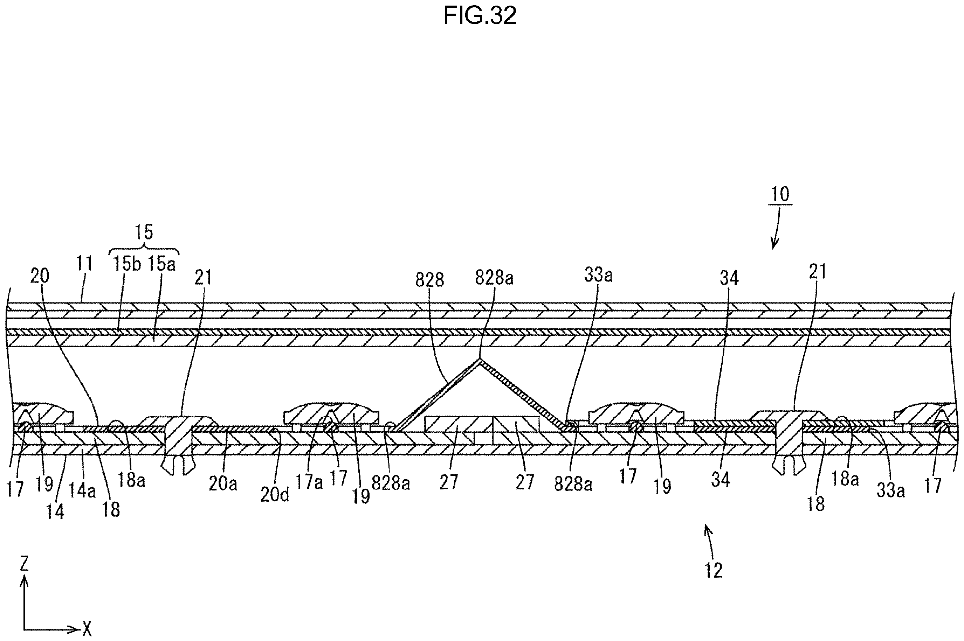

A ninth embodiment of the present invention will be described with reference to FIG. 32. The ninth embodiment includes an elevated section 828 having a shape different from that of the eighth embodiment described above. Configurations, functions, and effects similar to those of the eighth embodiment will not be described.

As illustrated in FIG. 32, the elevated section 828 in this embodiment has a cross section that is substantially triangular. According to the configuration, the elevated section 828 requires folding lines 828a at three positions, which are positions of projecting bases and a vertex. Namely, the number of the folding liens 828a is smaller than the number of the folding lines in the sixth embodiment. Therefore, unevenness that may result from the folding lines 828a can be reduced.

### <Tenth Embodiment>

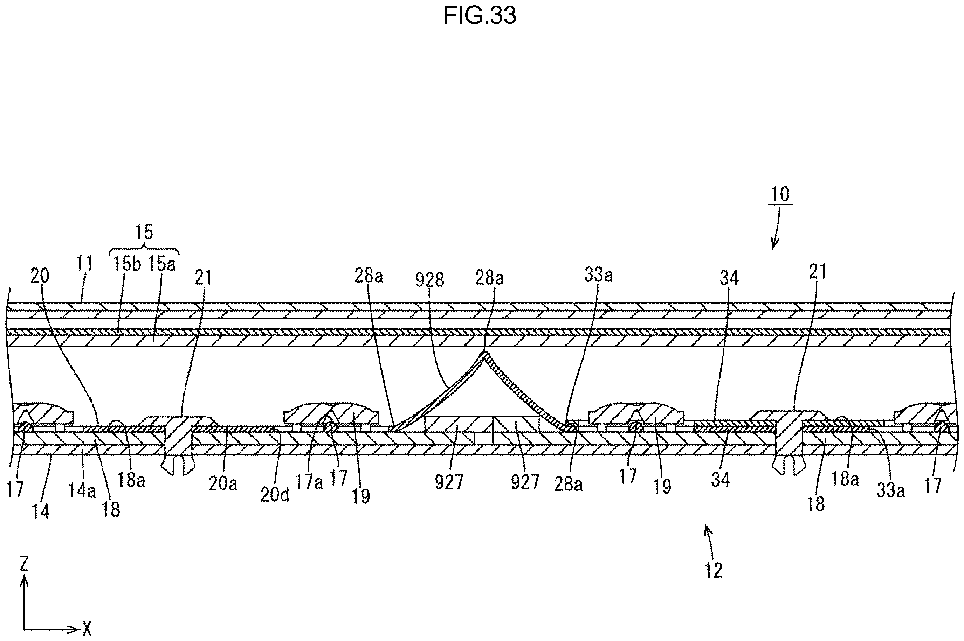

A tenth embodiment of the present invention will be described with reference to FIG. 33. The tenth embodiment includes an elevated section 928 having a shape different from that of the ninth embodiment described above. Configurations, functions, and effects similar to those of the ninth embodiment will not be described.

As illustrated in FIG. 33, the elevated section 928 in this embodiment has a cross section that is substantially triangular and includes a pair of sloped surfaces that are curved. The sloped surfaces are recessed inward (toward inter-board connectors 927) in a cross-sectional view. According to the configuration, functions and effects similar to those of the ninth embodiment described above can be achieved.

### <Eleventh Embodiment>

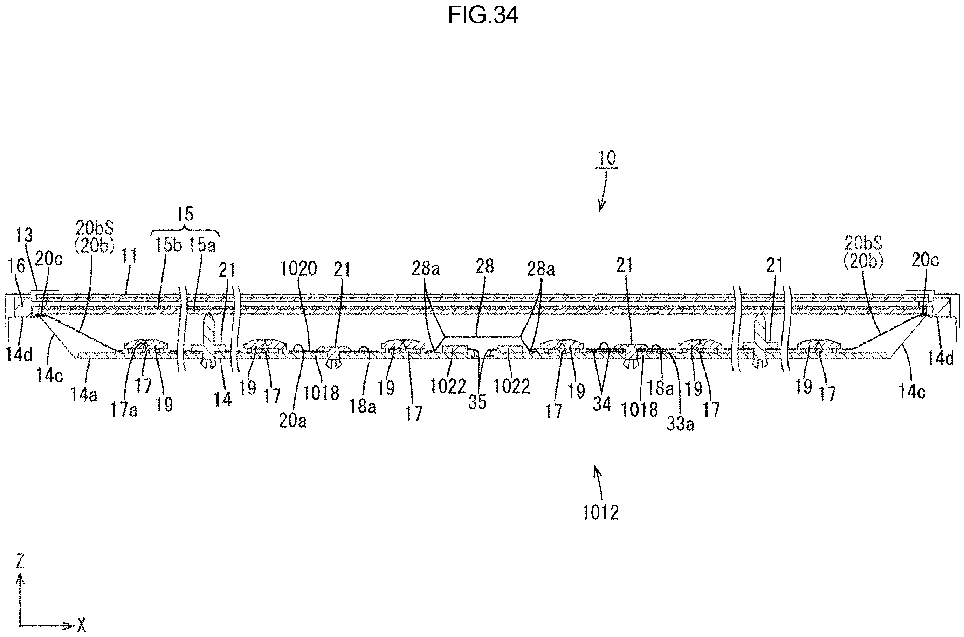

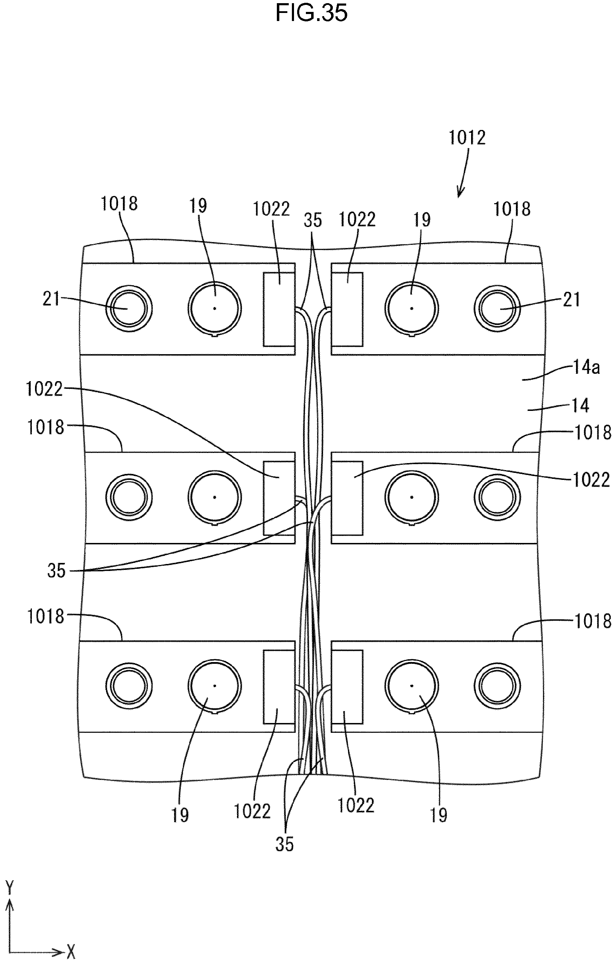

An eleventh embodiment of the present invention will be described with reference to FIGS. 34 and 35. The eleventh embodiment includes LED boards 1018 having a configuration different from that of the sixth embodiment. Configurations, functions, and effects similar to those of the sixth embodiment will not be described.

As illustrated in FIGS. 34 and 35, the LED boards 1018 in this embodiment include connectors 1022 disposed at ends of the LED boards 1018 in the middle of a backlight unit 1012 with respect to the long direction. In the backlight unit 1012, every two LED boards 1018 arranged in the X-axis direction are separated from each other with a predefined gap (a space for passing wiring members 35, which will be described later). Two connectors 1022 mounted on the LED boards 1018 respectively are opposed to each other with the gap therebetween at positions around the middle of the backlight unit 1012 with respect to the long direction. Namely, the connectors are arranged in two lines in the Y-axis direction around the middle of the backlight unit 1012 with respect to the long direction. In this embodiment, the connectors 22 included in the first embodiment or the connectors 522 included in the sixth embodiment are not provided at ends of the LED boards 1018 closer to the ends of the backlight unit 1012 with respect to the long direction.

Wire-side connectors (not illustrated) provided at ends of the wiring members 35 can be fitted to the connectors 1022. Namely, the connectors 1022 are wired-to-board type connectors similar to the connectors 22 in the first embodiment and the connectors 522 in the sixth embodiment. Each wiring member 35 includes the wire-side connecters at the ends. One of the wire-side connectors is electrically connected to an LED driver circuit board. The other one of the wire-side connectors is electrically connected to the connector 1022. The wiring member 35, the wire-side connectors, and the connector 1022 relay power supply to the corresponding LED board 1018. An elevated section 1028 of a bottom-side reflecting portion 1020a of a reflection sheet 1020 is disposed to collectively cover the connectors 1022, every two of which are arranged in the X-axis direction, and the wiring members 35 disposed between the connectors 1022. According to the configuration, functions and effects similar to those of the sixth embodiment can be achieved. FIG. 35 illustrates the backlight unit 1012 without the reflection sheet 1020 to provide clear view of the connectors 1022 and the wiring members 35.

### <Twelfth Embodiment>

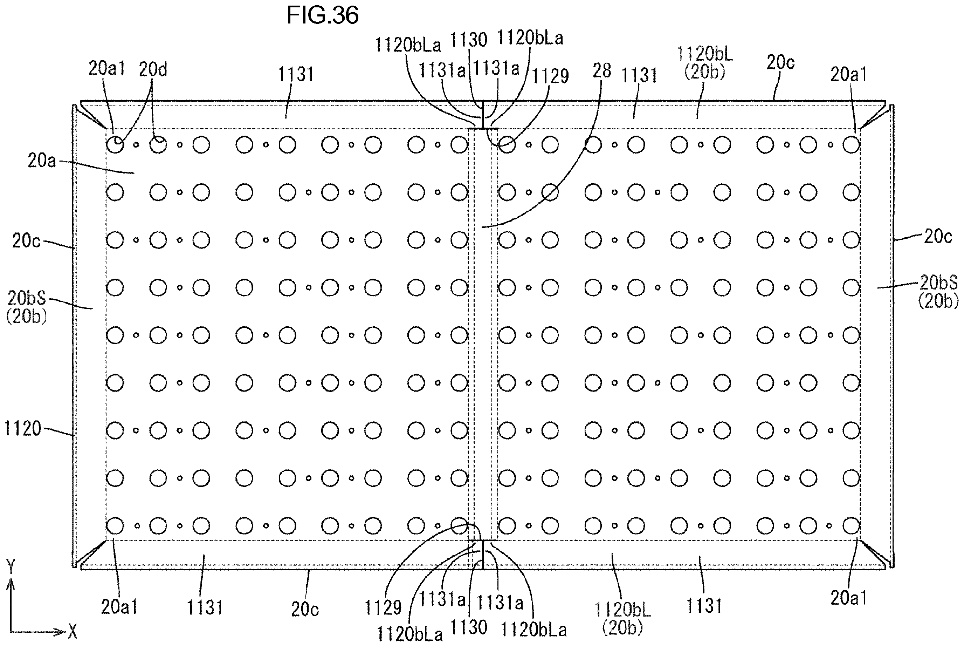

A twelfth embodiment of the present invention will be described with reference to FIG. 36. The twelfth embodiment includes a reflection sheet 1120 having a configuration different from that of the sixth embodiment. Configurations, functions, and effects similar to those of the sixth embodiment will not be described.

As illustrated in FIG. 36, the reflection sheet 1120 in this embodiment includes second cut lines 1130 connected to cut lines 1129 at about the middle of the cut lines 1129. Projected reflecting sections 1131 of long-side projected reflecting portions 1120bL include projecting-side first separating edges 1120bLa and projecting-side second separating edges 1131a.

### <Thirteenth Embodiment>

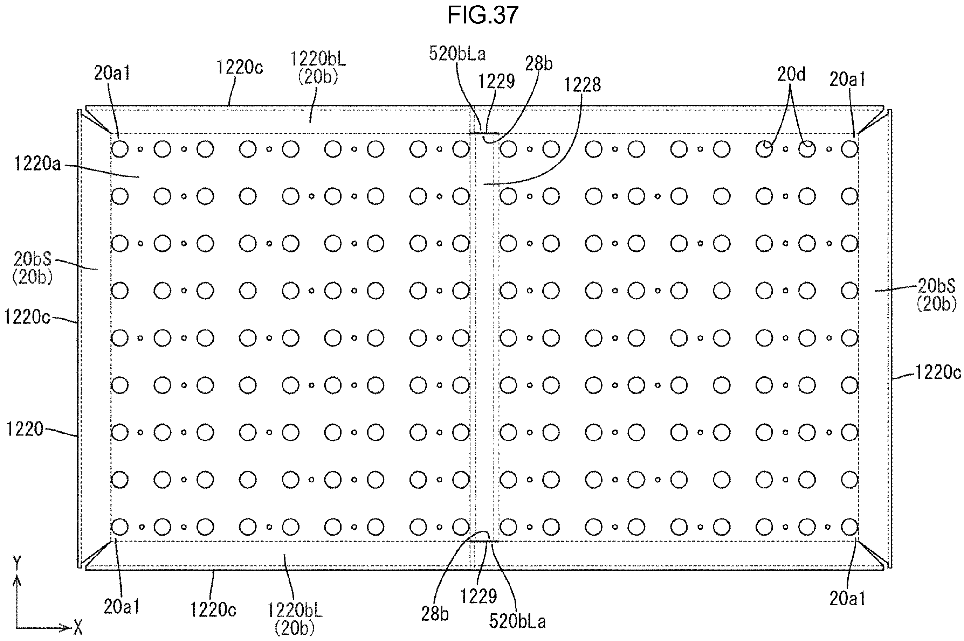

A thirteenth embodiment of the present invention will be described with reference to FIG. 37. The thirteenth embodiment includes a reflection sheet 1220 having a configuration different from that of the seventh embodiment described earlier. Configurations, functions, and effects similar to those of the seventh embodiment will not be described.

As illustrated in FIG. 37, the reflection sheet 1220 in this embodiment includes long-side projected reflecting portions 1220bL having a non-divided configuration. This embodiment is similar to the seventh embodiment described earlier in that the reflection sheet 1220 includes cut lines 1229 at boundaries between an elevated section 1228 of a bottom-side reflecting portions 1220a and the long-side projected reflecting portions 1220bL. However, this configuration is different from the seventh embodiment described earlier in that the long-side projected reflecting portions 1220bL and long-side extended portions 1220c do not include the second cut lines 630 (see FIG. 30) included in the seventh embodiment. To shape the reflection sheet 1220 that is in the developed state, the elevated section 1228 of the bottom-side reflecting portion 1220a is formed through bending processing. The long-side projected reflecting portions 1220bL are folded in the bending processing. According to the configuration, unexpected deformation is less likely to occur in the long-side projected reflecting portions 1220bL due to deformation of the bottom-side reflecting portion 1220a.

### <Fourteenth Embodiment>

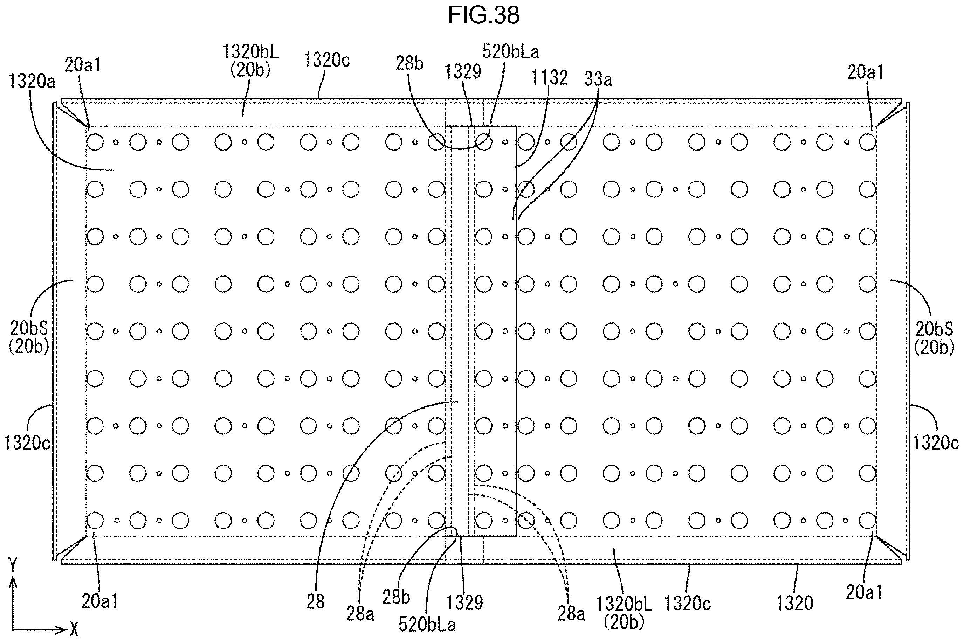

A fourteenth embodiment of the present invention will be described with reference to FIG. 38. The fourteenth embodiment includes a reflection sheet 1320 having a configuration different from that of the sixth embodiment described earlier. Configurations, functions, and effects similar to those of the sixth embodiment will not be described.

As illustrated in FIG. 38, the reflection sheet 1320 in this embodiment includes a bottom-side reflecting portion 1320a that is divided and a pair of long-side projected reflecting portions 1320bL that are not divided. Namely, this embodiment is similar to the sixth embodiment described earlier in that the reflection sheet 1320 includes cut lines 1329 at boundaries between an elevated section 1328 of the bottom-side reflecting portion 1320a and the long-side projected reflecting portions 1320bL and the bottom-side reflecting portion 1320a includes a third cut line 1332. However, this embodiment is different from the sixth embodiment in that the long-side projected reflecting portions 1320bL and long-side extended portions 1320c do not include the second cut lines 30 (see FIG. 25) included in the sixth embodiment. Because the reflection sheet 1320 is not configured as two parts, the reflection sheet 1320 can be handled as a single part. The number of parts of the backlight unit can be reduced and thus this configuration has an advantage in parts management. To shape the reflection sheet 1320 that is in the developed state, the elevated section 1328 of the bottom-side reflecting portion 1320a may be formed through bending processing. The long-side projected reflecting portions 1320bL may be folded in the bending processing similar to the thirteenth embodiment.

### <Fifteenth Embodiment>

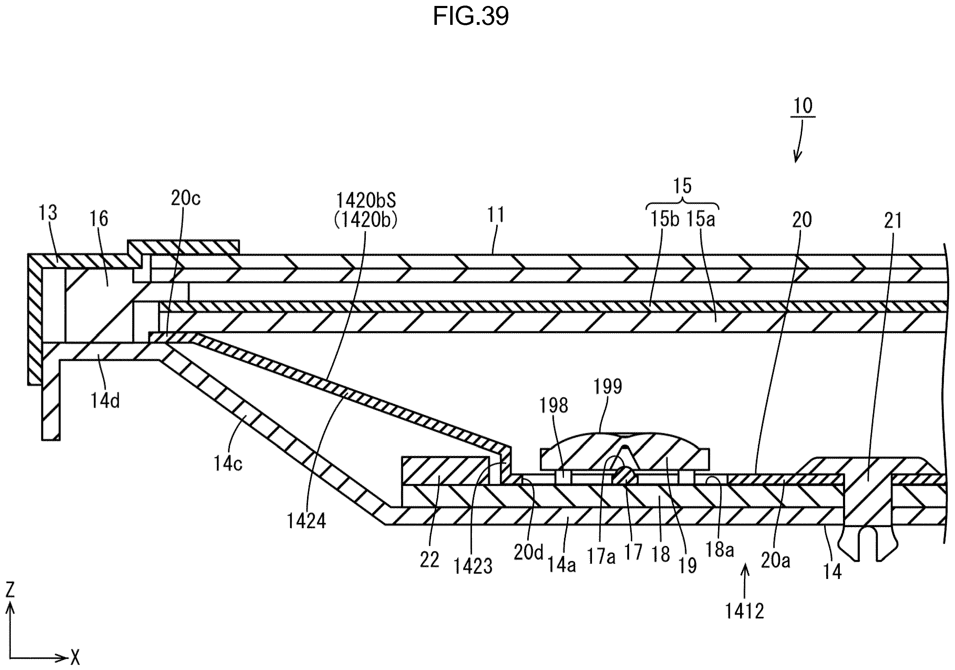

A fifteenth embodiment of the present invention will be described with reference to FIG. 39. The fifteenth embodiment includes base-side projected sections 1423 having a height different from that of the first embodiment. Configurations, functions, and effects similar to those of the first embodiment will not be described.

As illustrated in FIG. 39, short-side projected reflecting portions 1420bS included in the reflection sheet 20 in this embodiment are configured such that the base-side projected sections 1423 project from a base-side reflecting portion 20a toward the light exiting side. Specifically, the base-side projected sections 1423 extend from a position higher than a section of the diffuser lens 19 (the light source) from which light rays do not exit (a lower surface of the diffuser lens 19 (a top surface of a mounting leg 198)) to a position lower than a vertex 199 (a panel-side vertex) of the diffuser lens 19. According to the configuration, the light rays are applied to the projected reflecting portions 1420bS without unevenness. Therefore, the light rays are directed from the projected reflecting portions 1420bS to the liquid crystal panel 11 and thus the uneven brightness is less likely to occur in the liquid crystal panel 11.

### <Other Embodiments>

The present invention is not limited to the above embodiments described in the above sections and the drawings. For example, the following embodiments may be included in technical scopes of the present invention.
(1) In the first to the fifth embodiment described above, the angle of the base-side projected sections of the projected reflecting portions is at least 85° or larger. However, the angle may be set in a range from 70° to 85°. Alternatively, the angle may be 70° or smaller.
(2) In the first to the fifth embodiment described above, the angle of the base-side projected sections of the projected reflecting portions is at least 95° or smaller. However, the angle may be 95° or lager.
(3) In the first to the fifth embodiment described above, the angle of the base-side projected sections of the short-side projected reflecting portions relative to the bottom-side reflecting portion is larger than the angle of the distal end-side reflecting sections of the short-side projected reflecting portions relative to the bottom-side reflecting portion. However, the angle of the base-side section of one of the short-side projected reflecting portions relative to the bottom-side reflecting portion may be larger than the angle of the distal end-side section of the short-side projected reflecting portion relative to the bottom-side reflecting portion but the angles of the other one of the short-side projected reflecting portions relative to the bottom-side reflecting portion may be the same.
(4) In the third embodiment described earlier, the angle of the base-side projected sections of the long-side projected reflecting portions relative to the bottom-side reflecting portion is larger than the angle of the distal end-side projected sections of the long-side projected reflecting portions relative to the bottom-side reflecting portion. However, the angle of the base-side section of one of the long-side projected reflecting portions relative to the bottom-side reflecting portion may be larger than the angle of the distal end-side section of the long-side projected reflecting portion relative to the bottom-side reflecting portion but the angles of the other one of the long-side projected reflecting portions relative to the bottom-side reflecting portion may be the same.
(5) In the first, the second, the fourth, and the fifth embodiments, the angle of the base-side projected sections of the short-side projected reflecting portions (the projected portions overlapping the connectors) relative to the bottom-side reflecting portion is larger than the angle of the distal end-side projected sections of the short-side projected reflecting portions relative to the bottom-side reflecting portion. The angles of the base-side projected sections and the distal end-side projected sections of the long-side projected reflecting portions (the projected reflecting portions not overlapping the connectors) relative to the bottom-side reflecting portion are the same. However, the angle of the base-side projected sections of the long-side projected reflecting portions (the projected reflecting portions not overlapping the connectors) relative to the bottom-side reflecting portion may be larger than the angle of the distal end-sections of the long-side projected reflecting portions relative to the bottom-side reflecting portion, and the angles of the short-side projected reflecting portions (The projected reflecting portions overlapping the connectors) relative to the bottom-side reflecting portion may be the same.
(6) In the first to the fifth embodiments described earlier, the power is sullied to the LED boards arranged two of them in each low along the X-axis direction via the connectors. However, as in the sixth embodiment, inter-board connectors for connecting the LED boards arranged two of them in each low along the X-axis direction to each other may be provided and connectors connected to wiring members may be disposed on the LED boards on one side. Namely, the reflection sheet in any one of the first to the fifth embodiments including the projected reflecting portions (having the configuration in which the angle of the base-side projected sections relative to the bottom-side reflecting portion is larger than the angle of the distal end-side projected sections relative to the bottom-side reflecting portion) and the LED boards including the inter-board connectors in any one of the sixth to the fourteenth embodiments may be combined.
(7) The featured configurations (e.g., the projected reflecting sections, the reflection sheet sections) including the elevated section in any one of the sixth to the fourteenth embodiments may be included in the reflection sheet of any one of the first to the fifth embodiment including the projected reflecting portions (having the configuration in which the angle of the base-side projected sections relative to the bottom-side reflecting portion is larger than the angle of the distal end-side projected sections relative to the bottom-side reflecting portion).
(8) The shape of the overlapping protrusion may be altered from that of the second embodiment described earlier where appropriate.
(9) The configuration of the second embodiment (the reflection sheet including the overlapping protrusion) is used for the basic configuration of the third embodiment. However, the configuration of any one of the first, the fourth, and the fifth embodiments (i.e., the reflection sheet without the overlapping protrusion) may be used for the basic configuration of the third embodiment.
(10) The configuration of the first embodiment (the reflection sheet without the overlapping protrusion) is used for the basic configuration of the fourth and the fifth embodiments. However, the configuration of the second embodiment (i.e., the reflection sheet including the overlapping protrusion) may be used for the basic configuration of the third embodiment.
(11) In the first to the fifth embodiments described earlier, the projected reflecting portions include the sections that are angled relative to the bottom-side reflecting portion with two different angles. However, the projected reflecting portions may include the sections that are angled relative to the bottom-side reflecting portion with three different angles.
(12) In the first to the fifth embodiments described earlier, the angle of the side plates of the chassis relative to the bottom plate is larger than the angle of the distal end-side projected sections of the projected reflecting portions relative to the bottom-side reflecting portion. However, the angles may be defined the other way around or equal to each other.
(13) In the first to the fifth embodiments described earlier, the creepage distance of each distal end-side projected section is larger than the creepage distance of each base-side projected section. However, the creepage distances of the distal end-side projected section and the base-side projected section may be defined the other way around or equal to each other.
(14) In the sixth to the fourteenth embodiments described earlier (except for the seventh, the twelfth, and the thirteenth embodiments), the bottom-side second separating edge (the third cut line) of the bottom-side reflecting portion is linear in the Y-axis direction. However, the bottom-side second separating edge (the third cut line) may be angled relative to the Y-axis direction.
(15) In the sixth to the twelfth embodiments described earlier, the projecting-side second separating edges (the second cut lines) of the long-side reflecting portions are linear in the Y-axis direction. However, the projecting -side second separating edges (the second cut lines) may be angled relative to the Y-axis direction.
(16) In the sixth to the fourteenth embodiments described earlier, the configuration in which the inter-board connectors are arranged in the Y-axis direction (the short direction of the chassis) is the basic configuration and the folding lines of the elevated section are parallel to the Y-axis direction. However, the inter-board connectors may be arranged in the X-axis direction (the long direction of the chassis) and the folding lines of the elevated section may be parallel to the X-axis direction.
(17) In each of the above embodiment sections, the backlight unit having the horizontally-long shape in the plan view is described. However, the present invention can be applied to a backlight unit having a vertically-long shape in the plan view. In the first to the fifth embodiments, the long-side projected reflecting portions are disposed to overlap the connectors when viewed in plan. Therefore, regarding the long-side projected reflecting portions, it is preferable that "the configuration in which the angle relative to the bottom-side reflecting portion is larger than the angle of the distal end-side projected section" has a higher priority. For the sixth to the fourteenth embodiments, it is preferable that the short-side projected reflecting portions may include second cut lines to have a divisional configuration or a folding configuration according with the formation of the elevated section.
(18) In each of the above embodiment sections, the backlight unit having the rectangular plan-view shape is described. However, the backlight may have a square plan view shape.
(19) In the eighth to the eleventh embodiments, the configuration of the sixth embodiment (the reflecting sheet having the divisional configuration) is used for the basic configuration. However, the configuration of any one of the seventh and the twelfth to the fourteenth embodiments (the reflections sheet that is not divided) may be used for the basic configuration. Alternatively, the configuration of any one of the eight to the tenth embodiments and the configuration of the eleventh embodiment may be combined.
(20) The configuration of the seventh embodiment (the reflection sheet that is not divided) is used for the basic configuration of the twelfth embodiment. However, the configuration of any one of the sixth and the eighth to the eleventh embodiments (the reflection sheet having the divisional configuration) may be used for the basic configuration.
(21) In the seventh to the fourteenth embodiments, the third cut line in the bottom-side reflecting portion continues into the ends of the cut lines at the boundaries between the bottom-side reflecting portion and the projected reflecting portions. However, the third cut line may be configured to continue into sections of the cut lines closer to the middle than the ends.
(22) The cross section and the plan-view shape of the elevated section can be altered from those of the sixth to the fourteenth embodiments where appropriate.
(23) In each of the above embodiments, the side plates of the chassis are angled relative to the bottom plate. However, the side plates may be substantially perpendicular to the bottom plate.
(24) The arrangement and the number of the fixing members within the plane of the bottom plate of the chassis may be altered from those of each of the above embodiments where appropriate. As long as the reflection sheet and the LED boards can be fixed with a fixing method other than using the fixing members (e.g., an adhesive, a double-sided adhesive tape), the fixing members can be omitted.
(25) In each of the above embodiments, the diffuser lenses are disposed on the LED boards . However, the diffuser lenses can be omitted. In such a case, the light emitting surfaces of the LEDs are directly opposed to the plate surface of the optical member.
(26) Each of the above embodiments includes the optical members including two optical sheets. However, the optical members may include a single optical sheet or three or more optical sheets. In such a case, a laminated multi-layered optical sheet prepared as a single component by placing multiple optical sheets in layers and bonding them together may be used. The kinds of the optical members may be altered where appropriate.
(27) Each of the above embodiments includes the optical members including the single diffuser plate. However, the optical members may include multiple diffuser plates. Alternatively, the diffuser plate may be omitted.
(28) Each of the above embodiments include the chassis made of metal. However, the chassis can be made of synthetic resin.
(29) Each of the above embodiments includes the LEDs as the light sources. However, other types of light sources such as organic ELs may be used.
(30) Each of the above embodiments includes the TFTs as the switching components for the liquid crystal display device. However, the present invention can be applied to a liquid crystal display device including switching components other than the TFTs (e.g., thin film diodes (TFDs)). Furthermore, the present invention can be applied to not only the liquid crystal display device configured to display color images but also a liquid crystal display device configure to display black-and-white images.
(31) In each of the above embodiment sections, the transmissive-type liquid crystal display is described. However, the preset invention can be applied to other type of liquid crystal display devices such as a reflective-type liquid crystal display device and a semi-transmissive-type liquid crystal display device.
(32) In each of the above embodiment sections, the liquid crystal display device including the liquid crystal panel as a display panel is described. However, the present invention can be applied to a display device including other type of display panel.
(33) In each of the above embodiment sections, the television device including the tuner is described. However the present invention can be applied to a display device that does not include a tuner. For example, the present invention can be applied to a liquid crystal display device used in an electronic signage (a digital signage) or an electronic blackboard.

### Explanation of Symbols

10: Liquid crystal display device (Display device)
10TV: Television device
11: Liquid crystal panel (Display panel)
12, 212, 412, 512, 612, 1012: Backlight unit (Lighting device)
14, 514: Chassis
14a, 514a: Bottom plate (Bottom portion)
14c: Side plate (Side portion)
17, 217, 417, 517: LED (Light source)
17a, 517a: Light emitting surface
18, 518, 1018: LED board (Light source board)
20, 120, 220, 320, 420, 520, 620, 1020, 1120, 1220, 1320: Reflection sheet (Reflecting member)
20a, 120a, 220a, 320a, 420a, 520a, 620a, 1320a: Bottom-side reflecting portion
20a1, 120a1: Corner
20b, 120b, 520b: Projected reflecting portion
20bL, 120bL, 220bL, 520bL, 620bL, 1120bL, 1220bL, 1320bL: Long-side projected reflecting portion (Projected reflecting portion)
20bS, 120bS, 220bS, 320bS, 520bS: Short-side projected reflecting portion (Projected reflecting portion)
22, 422, 522, 1022: Connector (Power feeding portion)
23, 123, 223, 323, 423: Base-side projected section
24, 124, 224, 324: Distal end-side projected section
25: Overlapping protrusion
27, 927: Inter board connector (Power feeing portion)
28, 728, 828, 928, 1028, 1228, 1328: Bulged section
28a, 728a, 828a: Folding line
28b: Bottom-side first separating edge
31, 631, 1131: Projected reflecting section
31a, 1131a: Projecting-side second separating edge
33: Reflection sheet section (Reflecting member section)
33a: Bottom-side second separating edge
34: Overlapping section
520bLa, 1120bLa: Projecting-side first separating edge
521: Fixing member

## Claims

1. A lighting device comprising:
a light source;
a chassis including a bottom portion on an opposite side from a light emitting surface side of the light source and holding the light source therein;
a light source board on which the light source is mounted and disposed along the bottom portion; and
a reflection member configured to reflect light rays from the light source, wherein
the reflection member at least includes a bottom-side reflecting portion and at least one projected reflecting portion, the bottom-side reflecting portion overlapping the light source board from the light emitting surface side, the at least one projected reflecting portion projects from the bottom-side reflecting portion toward a light exiting side,
the at least one projected reflecting portion includes a base-side projected section angled relative to the bottom-side reflecting portion with an angle that is larger than an angle of a distal end-side projected section of the at least one projected reflecting portion relative to the bottom-side reflecting portion, and
the base-side projected section projects from the bottom-side reflecting portion toward the light exiting side to a position lower than a panel-side vertex of the light source.

2. The lighting device according to claim 1, wherein the base-side projected section projects from the bottom-side reflecting portion to a position higher than a section of the light source from which the light rays do not exit.

3. The lighting device according to claim 1 or 2, further comprising a power feeding portion disposed on the light source board for feeding power to the light source, wherein
the at least one projected reflecting portion is disposed to cover the power feeding portion.

4. The lighting device according to claim 3, wherein the angle of the base-side projected section relative to the bottom-side reflecting portion is set in a range from 70° to 95°.

5. The lighting device according to claim 3, wherein the angle of the base-side projected section relative to the bottom-side reflecting portion is set in a range from 85° to 95°.

6. The lighting device according to any one of claims 1 to 5, wherein
the bottom-side reflecting portion includes a corner,
the at least one projected reflecting portion includes a pair of projected reflecting portions projecting from edges of the bottom-side reflecting portion which define the corner,
a first projected reflecting portion of the pair of the projected reflecting portions is angled relative to the bottom-side reflecting portion with a constant angle,
a second projected reflecting portion of the pair of the projected reflecting portions includes the base-side projected section angled relative to the bottom-side reflecting portion with the angle larger than the angle of the distal end-side projected section relative to the bottom-side reflecting portion, and
the distal end-side projected section includes an overlapping protrusion protruding toward the first projected reflecting portion to overlap the first projected reflecting portion.

7. The lighting device according to any one of claims 1 to 6, wherein
the at least one projected reflecting portion includes projected reflecting portions disposed in a loop to surround the bottom-side reflecting portion, and
the projected reflecting portions include base-side projected sections and distal end-side projected sections, an angle of the base-side projected sections relative to the bottom-side reflecting portion being larger than an angle of the distal end-side projected sections.

8. The lighting device according to any one of claims 1 to 7, wherein
the chassis includes side portions projecting from the bottom portion toward the light exiting side, and
the side portions are angled relative to the bottom portion.

9. The lighting device according to claim 8, wherein the side portions are angled relative to the bottom portion with an angle larger than the angle of the distal end-side projected section of the projected reflecting portion relative to the bottom-side reflecting portion.

10. The lighting device according to any one of claims 1 to 9, wherein the distal end-side projected section of the projected reflecting portion has a creepage distance larger than a creepage distance of the base-side projected section of the projected reflecting portion.

11. The lighting device according to any one of claims 1 to 10, wherein the projected reflecting portion includes a boundary between the base-side projected section and the distal end-side projected section, the boundary being at a same height for an entire area.

12. The lighting device according to any one of claims 1 to 11, wherein the light sources include LED light sources.

13. The lighting device according to any one of claims 1 to 11, wherein the light sources include the LED light sources and diffuser lenses.

14. A display device comprising:
the lighting device according to any one of claims 1 to 13; and
a display panel configured to display an image using light from the lighting device.

15. A television device comprising the display device according to claim 14.
